# EUROPÄISCHE PATENTSCHRIFT

(11) **EP 1 185 433 B1**
(45) Veröffentlichungstag und Bekanntmachung des Hinweises auf die Patenterteilung: **12.11.2003**
(21) Anmeldenummer: 00930987.3
(22) Anmeldetag: 23.03.2000
(51) Int. Cl.: B60N 2/44

(54) **UMSCHALTGETRIEBE**
ADJUSTING GEAR MECHANISM
MECANISME INVERSEUR

(30) Priorität: 24.03.1999 DE 19914188; 18.06.1999 DE 19929564; 18.06.1999 DE 19929565
(43) Veröffentlichungstag der Anmeldung: 13.03.2002
(73) Patentinhaber: Brose Fahrzeugteile GmbH & Co. KG Coburg, 96450 Coburg (DE)
(72) Erfinder: SCHUMANN, Peter, D-96253 Untersiemau (DE)
(74) Vertreter: Baumgärtel, Gunnar, Dr.
(86) Internationale Anmeldenummer: DE0000928
(87) Internationale Veröffentlichungsnummer: WO00056571

(56) Entgegenhaltungen:
- EP-A- 0 631 901
- DE-A- 4 120 617
- DE-A- 4 403 506
- DE-A- 19 527 912
- GB-A- 2 136 086
- GB-A- 2 197 830
- US-A- 5 038 086
- US-A- 5 092 197
- US-A- 5 453 651
- US-A- 5 483 853
- US-A- 5 812 399

## Beschreibung

Die Erfindung betrifft ein Umschaltgetriebe für mindestens zwei Verstelleinrichtungen gemäß dem Oberbegriff des Anspruchs 1.

Dieses Umschaltgetriebe dient zum Übertragen der Antriebskraft von einem manuellen oder motorischen Antrieb über mindestens ein Kupplungselement auf mindestens ein Antriebselement jeder Verstelleinrichtung, das konzentrisch zu wenigstens einem Getriebeelement des Antriebs (d.h. einem Getriebeelment, das von der Antriebsseite her gesehen vor der Kupplung liegt, das also mit dem Antrieb ohne Zwischenschaltung der Kupplung verbunden ist) angeordnet ist, wobei die einzelnen Antriebselemente durch das mindestens eine Kupplungselement wahlweise mit dem Antrieb koppelbar sind.

Bei einem aus der EP 0 631 901 B1 bekannten Umschaltgetriebe für mehrere Verstelleinrichtungen zum Verstellen von Kraftfahrzeugsitzen sind mehrere jeweils einem Verstellgetriebe zugeordnete Schrittschaltwerke vorgesehen. Ein Handschwenkhebel ist wahlweise mit einem der Schrittschaltwerke oder mit mehreren Schrittschaltwerken gleichzeitig koppelbar, so daß bei einem Kraftfahrzeugsitz mit einem Handschwenkhebel mehrere Verstellfunktionen wie Höhenverstellung des Sitzkissens, Neigungswinkelverstellung der Rücklehne oder Kopfstützeneinstellung ausgeführt werden können.

Zu diesem Zweck ist der Handschwenkhebel koaxial zu einem Innen- und Außenteil der Schrittschaltwerke schwenkbar gelagert und weist eine der Anzahl der Schrittschaltwerke entsprechende Anzahl axial abstehender Mitnehmerstifte auf, die in eine axiale Aufnahme in dem Außenteil des jeweils einem Mitnehmerstift zugeordneten Schrittschaltwerks zu dessen Drehmitnahme formschlüssig einschiebbar sind. Hierfür wird der Handschwenkhebel seitlich der Schrittschaltwerke oder zwischen zwei Schrittschaltwerken angeordnet.

Aus der US 5,483,853, als dem nächsten Stand der Technik nach den Oberbegriff des Anspruchs 1, ist ein Umschaltgetriebe bekannt, daß zwei längsverschiebliche Kupplungselemente aufweist. Diese sind wahlweise mit einem Getriebeelement eines Motorgetriebes koppelbar, um eine Verbindung zwischen dem Motorgetriebe und einem ausgangsseitigen Getriebeelement herzustellen. Dabei sind die Kupplungselemente über Hohlwellen jeweils drehfest mit den anzutreibenden Wellen verbunden.

Die GB 2 136 086 A betrifft einen aus einem Handrad, einer Antriebswelle und einem darauf gelagerten Sonnenrad bestehenden Antrieb, der über ein Kupplungselement in Form eines von dem Sonnenrad angetriebenen Planetenrades wahlweise mit weiteren Zahnrädern koppelbar ist. Die Kopplung erfolgt dadurch, daß über einen Betätigungshebel und eine hierdurch verstellbaren Exzenter das Planetenrad wahlweise mit einem oder mehreren Zahnrädern in Eingriff bringbar ist.

Aufgabe der vorliegenden Erfindung ist es, ein universelles Umschaltgetriebe für mehrere Verstelleinrichtungen der eingangs genannten Gattung zu schaffen, das für manuelle oder motorische Antriebe, für eine beliebige Anordnung der Getriebe bzw. deren An- und Abtriebsachsen untereinander sowie für unterschiedliche Umschaltprinzipien geeignet ist und ein hohes Maß an Funktionssicherheit gewährleistet.

Diese Aufgabe wird erfindungsgemäß durch die Merkmale des Anspruchs 1 gelöst.

Danach ist mindestens einen Schalter zum Sperren oder Freigeben der Kupplungselemente vorgesehen.

Das Begriffspaar "Freigeben oder Sperren" der Kupplung bedeutet hierbei, daß mittels des Schalters die Kupplung zur Übertragung der Antriebskräfte des Antriebs auf eine bestimmte Verstelleinrichtung freigegeben oder gesperrt werden kann. Je nach der Schaltstellung des Schalters ist jeweils (mindestens) eine der über das Umschaltgetriebe und insbesondere dessen Kupplung mit dem Antrieb koppelbaren Verstelleinrichtungen durch eine entsprechende Freigabe der Kupplung mit dem Antrieb zur Übertragung von Antriebskräften verbunden, während die anderen Verstelleinrichtungen von dem Antrieb entkoppelt sind, was einer gesperrten Kupplung entspricht.

Die erfindungsgemäße Lösung eignet sich sowohl für manuelle Antriebe wie schwenkbare Hebel oder drehbare Handräder als auch für elektrische Antriebe, bei denen ein Elektromotor beispielsweise mit einem Schnecken- oder Stirnradgetriebe verbunden ist. Die erfindungsgemäße Lösung eignet sich ferner für verschiedene Umschaltprinzipien, d.h. verschiedene Kopplungen der mehreren Abtriebsstufen mit der einen Antriebsstufe und für eine beliebige Anordnung der Getriebe untereinander mit wahlweise voneinander verschiedenen Antriebs- und Abtriebsachsen, die sowohl parallel versetzt als auch winklig zueinander angeordnet sein können, oder mit identischen Antriebs- und Abtriebsachsen. Dabei zeichnet sich das erfindungsgemäße Umschaltgetriebe aufgrund seines einfachen Konstruktionsprinzips durch ein hohes Maß an Funktionssicherheit aus.

Das erfindungsgemäße Umschaltgetriebe ermöglicht es, jedem Antriebselement eigene Kupplungselemente oder zwei benachbarten Antriebselementen ein gemeinsames Kupplungselement zuzuordnen, wobei vorzugsweise ein Schalter sämtliche Kupplungselemente schaltet.

Durch die Anordnung feinverzahnter Formschlußbereiche der Kupplungselemente und der den Kupplungselementen zugeordneten Antriebselemente wird eine unmittelbare Kupplung von Antrieb und Antriebselementen in jeder beliebigen Stellung der Getriebeelemente des Antriebs sowie der Kupplungs- und Antriebselemente bei einer Schalterbetätigung gewährleistet.

Eine vorteilhafte Ausgestaltung der erfindungsgemäßen Lösung ist dadurch gekennzeichnet, daß die Kupplungselemente schwenkbar gelagert sind und in radiale oder axiale Formschlußbereiche der Antriebselemente eingreifen.

Der Antrieb kann wahlweise aus einem manuell betätigbaren Antriebshebel bestehen oder aus einem Motor und einem insbesondere aus einem von einer Antriebsschnecke angetriebenen Schneckenrad bestehenden Verzahnungsgetriebe zusammengesetzt sein. Beide Antriebsformen sind für das das erfindungsgemäße Umschaltgetriebe einsetzbar, da die Kraftübertragung vom Antrieb zur jeweiligen Verstelleinrichtung durch die Schaltvorrichtung vollständig gesperrt oder freigegeben wird, so daß An- und Abtrieb voneinander entkoppelt sind.

Eine Weiterbildung der erfindungsgemäßen Lösung ist dadurch gekennzeichnet, daß die Kupplungselemente als schwenkbare Hebel ausgebildet und durch ein Federelement in Kupplungsrichtung vorgespannt sind und in der Nullpunktlage des manuell betätigbaren Antriebshebels mit dem ihnen zugeordneten Antriebselement in Eingriff stehen.

Alternativ kann das Kupplungselement aus einem einteiligen, als schwenkbar gelagerte Wippe ausgebildeten Kupplungselement bestehen, wobei der Schalter in der Blockierstellung das Kupplungselement an einer Schwenkbewegung, die einen Eingiff in ein Antriebselement erzeugen würde, hindert.

Benachbarten Antriebselementen wird vorzugsweise ein axial verschiebbares oder schwenkbares und durch den Schalter betätigbares Kupplungselement zugeordnet.

Für Antriebe mit einem manuell betätigbaren Antriebshebel kann der Schalter aus einem Schiebeschalter, einem Schwenkschalter, einem insbesondere als Exzenterschalter ausgebildeten Drehschalter, einem Wippschalter oder einem Dreh- und Schiebeschalter bestehen.

Für motorische Antriebe können die Schalter zusätzlich mit einem elektrischen Schalter gekoppelt werden, mit dem der motorische Antrieb in die eine oder andere Richtung reversierbar ist.

Eine weiter vorteilhafte Ausgestaltung der erfindungsgemäßen Lösung ist dadurch gekennzeichnet, daß bei einer Anordnung von drei Verstelleinrichtungen die Kupplungselemente in einem Dreieck zueinander positioniert sind und daß zur Freigabe der Kupplungselemente für eine Verstelleinrichtung der Schalter ein Dreieck-Schiebeschalter ist, dessen Schiebekontur der Dreieckskontur der Anordnung der Kupplungselemente zumindest angenähert ist, wobei die Dreieckkontur wahlweise die Form eines gleichschenkligen oder gleichseitigen Dreiecks aufweisen kann.

Zum Antrieb von zwei oder mehr Verstelleinrichtungen, deren Abtriebsachsen relativ weit auseinanderliegen, wie beispielsweise einer Sitzhöhen- und Lehnenneigungsverstellung bei einem Fahrzeugsitz, erfolgt die Kraftübertragung von dem Getriebe (81) mindestens einer der Verstelleinrichtungen über ein Transmissionselement zum Abtriebselement dieser Verstelleinrichtung.

Diese Variante der erfindungsgemäßen Lösung ist nicht nur für weiter voneinander beabstandete Abtriebsachsen von Verstelleinrichtungen, sondern auch für winklig zueinander stehende Abtriebsachsen geeignet. Dabei kann ein geringfügiger Winkelvorsatz durch ein insbesondere als Kette, Zahnriemen oder Seil ausgebildetes Transmissionselement selbst ausgeglichen werden, während ein großer Winkelvorsatz durch eine geeignete Vorrichtung wie beispielsweise ein Kardangetriebe überbrückt werden kann.

Mittels des manuellen oder motorischen Antriebs können über das Umschaltgetriebe separat oder gemeinsam mindestens zwei verschiedene Antriebselemente angetrieben werden, wodurch je nach angewähltem Antriebselement über entsprechende Abtriebselemente mindestens zwei der folgenden Sitzverstellvorgänge eines Kraftfahrzeugsitzes, nämlich
- eine Verstellung der Längsposition des Sitzes,
- eine Verstellung der Sitzhöhe,
- eine Verstellung der Neigung einer Rückenlehne
- eine Verstellung einer Lordosestütze,
- eine Verstellung der Neigung eines Sitzkissens,
- eine Verstellung der Sitzkissentiefe
- eine Verstellung der Kopfstützenhöhe,
- eine Verstellung der Kopfstützenneigung und/oder
- eine Verstellung der Armlehnenneigung,
durchführbar sind.

In einer Weiterbildung der Erfindung, die bei Umschaltgetrieben für mittels eines Verstellhebels betätigbaren Verstelleinrichtungen zu einer erheblichen Verbesserung des Bedienkomforts führt, ist der Schalter zum Sperren oder Freigeben des mindestens einen Kupplungselementes des Umschaltgetriebes durch eine auf dem Verstellhebel angeordnete Schalterbetätigung schaltbar.

Die Schalterbetätigung des Schalters zum Sperren oder Freigeben des Kupplungselementes des Umschaltgetriebes ist durch ihre Anordnung auf dem Verstellhebel der Verstelleinrichtung für eine Bedienperson besonderes einfach erreichbar und gestattet eine besonders einfache Bedienung des Umschaltgetriebes. Hierzu wird beim Ergreifen des Verstellhebels zunächst mittels der Schalterbetätigung das mindestens eine Kupplungselement derart geschaltet, daß diejenige Verstelleinrichtung an den Antrieb gekoppelt ist, deren Einstellung von der Bedienperson gewünscht wird. Unmittelbar im Anschluß daran und ohne daß zusätzliche Handgriffe erforderlich wären, kann die Bedienperson den Verstellhebel betätigen, um die Einstellung der Verstelleinrichtung herbeizuführen.

Bei dem Verstellhebel zum Betätigen des Antriebs kann es sich insbesondere um einen Schwenkhebel handeln, der einen manuellen Antrieb für die Verstelleinrichtungen bildet.

Die Schalterbetätigung kann nach einer Variante der Erfindung zur Bildung eines Schwenk- oder eines Drehschalters vorgesehen sein und dabei auf der Schwenkachse des Verstellhebels oder auch außerhalb (neben) dieser gelagert sein.

Zum anderen kann die erfindungsgemäße Lösung auch durch weitere Schalterbetätigungen verwirklicht werden, die beispielsweise zur Bildung eines Schiebe- oder eines Wippschalters vorgesehen sind.

Mit Vorteil ist die Schalterbetätigung in einer Ausnehmung des Verstellhebels angeordnet, die zugleich mindestens einen Anschlag für die Schalterbetätigung bildet. Dies ermöglicht zum einen eine geschützte Lagerung der Schalterbetätigung und zum anderen eine geeignete Begrenzung von deren Verstellweg.

Eine geschützte Anordnung des Schalters kann ferner dadurch erreicht werden, daß der Verstellhebel an dem Fahrzeugsitz befestigt ist und die Schalterbetätigung auf der dem Fahrzeugsitz zugewandten Seite des Verstellhebels zwischen dem Verstellhebel und dem Fahrzeugsitz gelagert ist.

Nach einer weiteren vorteilhaften Ausführungsform ragt die Schalterbetätigung in mindestens zwei unterschiedlichen Schaltzuständen des Schalters mit einem Betätigungsabschnitt jeweils über unterschiedliche seitliche Endabschnitte des Verstellhebels hinaus. Hierdurch kann eine Bedienperson beim Ergreifen des Verstellhebels unmittelbar erfühlen, in welcher Schaltposition sich die Schalterbetätigung befindet und dementsprechend den Schaltzustand des Schalters erkennen.

In einer anderen bevorzugten Weiterbildung der Erfindung ist der Schalter zum Sperren oder Freigeben des Kupplungselementes mittels einer Schalterbetätigung schaltbar, auf die ein elastisches Element eine Kraft in Richtung auf mindestens eine Schaltposition der Schalterbetätigung ausübt, die einem definierten Schaltzustand des Schalters entspricht.

Somit können die einzelnen Schaltpositionen der Schalterbetätigung mittels eines geeignet vorgespannten elastischen Elementes quasi automatisch eingestellt werden, wenn eine Bedienperson die Schalterbetätigung in Richtung auf eine gewünschte Schaltposition bewegt.

Hierzu kann das elastische Element insbesondere derart ausgebildet und angeordnet sein, daß dessen Kraft erst dann in Richtung auf die jeweilige Schaltposition wirkt, wenn sich die Schalterbetätigung (aufgrund der Betätigung durch eine Bedienperson) der Schaltposition bis auf einen vorgebbaren Abstand genähert hat, insbesondere wenn die Schalterbetätigung eine instabile Referenz- oder Mittellage zwischen zwei Schaltpositionen überwunden hat.

Dabei kann aber auch die instabile Referenz- oder Mittellage selbst einer Schaltposition der Schalterbetätigung entsprechen, in der eine bestimmte Verstelleinrichtung über das Umschaltgetriebe mit dem Antrieb gekoppelt ist.

Ferner kann die Schalterbetätigung auch derart ausgebildet sein, daß entlang des Weges, den die Schalterbetätigung aufgrund der von dem vorgespannten elastischen Element ausgeübten Kraft zurücklegt, mehrere Schaltpositionen hintereinander angeordnet sind, von denen zunächst die erste und bei einer weiteren Betätigung durch eine Bedienperson die zweite usw. angefahren werden. In diesem Fall sind also die einzelnen, hintereinander angeordneten Schaltpositionen der Schalterbetätigung nicht durch eine instabile Referenz- oder Mittellage bezüglich der Wirkung des elastischen Elementes voneinander getrennt. Es ist dann vorteilhaft, wenn die Schalterbetätigung beim Passieren der einzelnen Schaltpositionen durch eine geeignete Rastvorrichtung (die vorzugsweise federnd vorgespannt ist) jeweils automatisch arretiert wird. Es bedarf dann einer weiteren Betätigung der Schalterbetätigung in Richtung auf die nächste Schaltposition, damit diese quasi automatisch durch das elastische Element angefahren wird.

Das elastische Element selbst wird vorzugsweise durch eine Zug- oder eine Druckfeder gebildet.

Der Bedienkomfort wird weiter erhöht, wenn ein Betätigungsabschnitt der Schalterbetätigung in den einzelnen Schaltzuständen des Schalters jeweils eine räumliche Orientierung aufweist, die charakteristisch für das Verstellteil ist, dessen Verstelleinrichtung in dem jeweiligen Schaltzustand über das Umschaltgetriebe mit dem Antrieb gekoppelt ist. Hierzu eignet sich insbesondere ein längserstreckter Betätigungsabschnitt, dessen räumliche Orientierung in den einzelnen Schaltzuständen jeweils der räumlichen Orientierung oder der Verstellrichtung des entsprechenden Verstellteiles entspricht.

Nach einer anderen Ausführungsform der Erfindung ist die Schalterbetätigung entlang einer Aufnahme in Form eines symbolischen Fahrzeugsitzes bewegbar, wobei jede Schaltposition der Schalterbetätigung in dieser Aufnahme einem definierten Schaltzustand des Schalters entspricht. Der Bedienkomfort kann hierbei noch dadurch erhöht werden, daß an der Aufnahme Ausformungen vorgesehen sind, die charakteristisch für die jeweilige Schaltposition der Schalterbetätigung und beim Bedienen der Schalterbetätigung erfühlbar sind. Hierdurch wird für eine Bedienperson beim Ergreifen der Schalterbetätigung unmittelbar erfühlbar, in welcher Schaltposition sich diese befindet und welche Verstelleinrichtung dadurch über das Umschaltgetriebe mit dem Antrieb gekoppelt ist.

Anhand von in der Zeichnung dargestellten Ausführungsbeispielen soll der der Erfindung zugrundeliegende Gedanke näher erläutert werden. Es zeigen:
- Figur 1: ein Umschaltgetriebe für einen manuellen Antrieb und zwei Verstelleinrichtungen mit ineinandergeschachtelten Antriebselementen in einer seitlichen Schnittansicht, entsprechend der Linie I-I aus Figur 2;
- Figur 2: das Umschaltgetriebe aus Figur 1 in einer geschnittenen Draufsicht, entsprechend der Linie II-II aus Figur 1,
- Figuren 3 bis 5: schematische Darstellungen verschiedener Schaltvorrichtungen für ein Umschaltgetriebe mit zwei Kupplungselementen
- Figur 6: eine schematische Dartellung einer Schaltvorrichtung für dreieckförmig zueinander positionierte Kupplungselemente;
- Figur 7: einen Schnitt durch die in Figur 6 dargestellten Antriebselemente, entlang der Linie VII-VII aus Figur 6,
- Figur 8: ein Umschaltgetriebe mit einem motorischen Antrieb in einer seitlichen Schnittansicht, entsprechend Linie VIII-VIII aus Figur 9,
- Figur 9: das Umschaltgetriebe aus Figur 8 in einer geschnittenen Draufsicht, entsprechend der Linie IX-IX aus Figur 8,
- Figuren 10 bis 12: schematische Darstellungen verschiedener Schalter für ein motorisch angetriebenes Umschaltgetriebe,
- Figur 13: eine Draufsicht auf ein Umschaltgetriebe mit zueinander beabstandeten Antriebsachsen zweier Verstelleinrichtungen und einem Zahnriemen zur Kraftübertragung zum entfernt liegenden Abtrieb und die
- Figuren 14 und 15: perspektivische Vorder- und Rückseitenansichten des Umschaltgetriebes gemäß Figur 13.
- Figuren 16a und 16b: einen schwenkbar gelagerten Verstellhebel für den manuellen Antrieb mehrerer Verstelleinrichtungen und eine auf dem Verstellhebel gelagerte Schalterbetätigung in zwei unterschiedlichen Schaltpositionen;
- Figur 17a: eine schematische Darstellung eines Verstellhebels entsprechend den Figuren 16a und 16b mit einer in einer Ausnehmung des Verstellhebels gelagerten Schalterbetätigung;
- Figur 17b: eine schematische Darstellung eines schwenkbar gelagerten Verstellhebels mit einer außerhalb der Schwenkachse des Verstellhebels gelagerten Schalterbetätigung in Form eines Schwenkschalters;
- Figur 17c: eine schematische Darstellung eines schwenkbaren Verstellhebels mit einer außerhalb der Schwenkachse des Verstellhebels gelagerten Schalterbetätigung in Form eines Drehschalters;
- Figur 18a: einen Verstellhebel mit einer Schalterbetätigung entsprechend Figur 17b, wobei die Schalterbetätigung mit einer Zugfeder gekoppelt ist;
- Figur 18b: eine Abwandlung des Ausführungsbeispiels aus Figur 18a;
- Figur 18c: einen Verstellhebel mit einer Schalterbetätigung entsprechend Figur 17b, wobei die Schalterbetätigung mit einer Druckfeder gekoppelt ist;
- Figur 18d: einen Verstellhebel mit einer Schalterbetätigung entsprechend Figur 17b, wobei der Betätigungsabschnitt der Schalterbetätigung hammerartig ausgebildet ist;
- Figuren 19a und 19b: eine Schalterbetätigung, die entlang einer Aufnahme in Form eines symbolischen Sitzes bewegbar ist;
- Figuren 20 bis 24: eine Schalterbetätigung für einen Schwenkschalter in verschiedenen Schaltpositionen, die jeweils charakteristisch für die Lage oder die Verstellrichtung eines bestimmten Verstellteiles eines Fahrzeugsitzes sind;
- Figuren 25 bis 27: eine weitere Schalterbetätigung für einen Schwenkschalter, dessen Schaltpositionen jeweils charakteristisch für die Lage oder die Verstellrichtung eines bestimmten Verstellteiles eines Fahrzeugsitzes sind;
- Figuren 28a und 28b: eine perspektivische Darstellung eines Verstellhebels gemäß den Figuren 16a und 16b mit einer in einer Ausnehmung des Verstellhebels gelagerten Schalterbetätigung für einen Schiebeschalter;
- Figur 29: ein Koppelelement für einen Schiebeschalter gemäß den Figuren 28a und 28b.

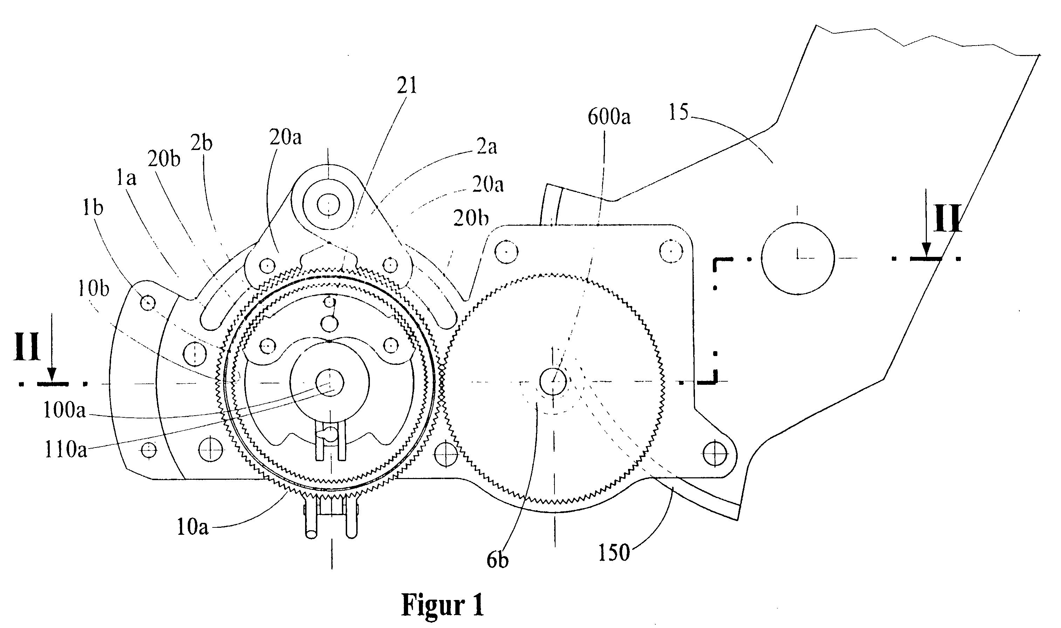

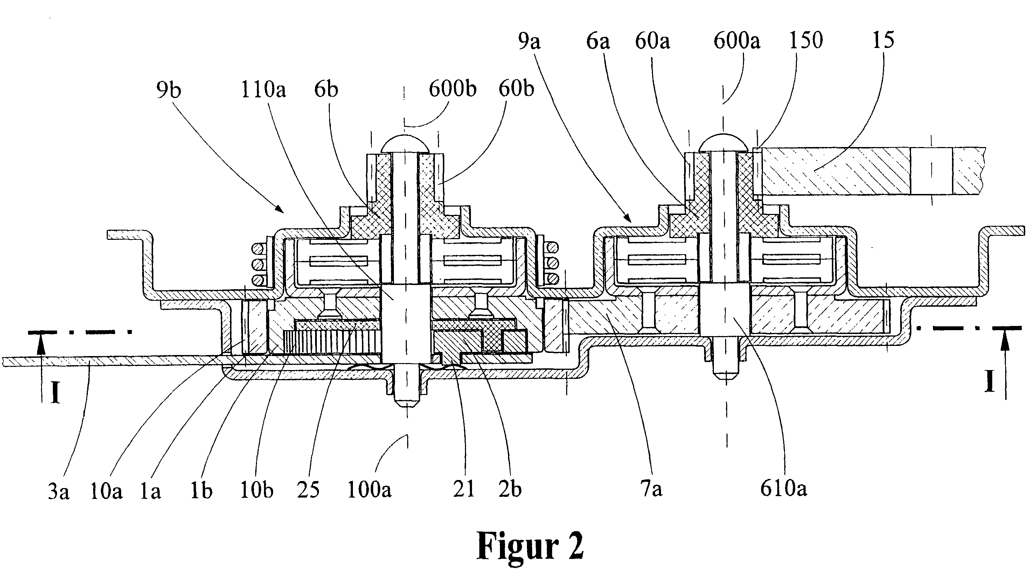

Die Figuren 1 und 2 zeigen den Aufbau eines Umschaltgetriebes für einen beidseitig wirkenden Verstellantrieb mit einem manuellen Antrieb 3a. Figur 1 zeigt das Getriebe in einer seitlichen Schnittdarstellung entsprechend der in Figur 2 mit II-II bezeichneten Schnittlinie, wohingegen Figur 2 das gleiche Getriebe in einer geschnittenen Draufsicht, entsprechend der Schnittlinie I-I aus Figur 1 zeigt.

Mittels eines nur in Figur 2 dargestellten, als manueller Antrieb dienenden und um eine Antriebsachse 100a schwenkbaren Antriebshebels 3a sind über entsprechende Kupplungselemente 2a, 2b zwei unterschiedliche Antriebselemente 1a, 1b antreibbar. Das erste Antriebselement 1a ist ein mit einer feinverzahnten Außenverzahnung 10a versehenes, äußeres Antriebsrad 1a, das drehbar auf dem zweiten Antriebselement 1b, einem mit einer feinverzahnten Innenverzahnung 10b versehenen, inneren Antriebsrad 1b gelagert ist. Beide Antriebsräder 1a, 1b sind koaxial zueinander angeordnet, wobei das innere Antriebsrad 1b drehbar auf einem koaxial zur Antriebsachse 100a angeordneten Lagerbolzen 110a gelagert ist.

Als Kupplungselemente 2a, 2b dienen zwei schwenkbare Rastelemente 2a, 2b, die in Abhängigkeit von der jeweiligen Antriebsrichtung zwischen zwei Endpositionen hin und her kippen und in radiale Formschlußbereiche der Antriebselemente eingreifen. In jeder Endposition erfolgt eine formschlüssige Verriegelung des jeweiligen Rastelements 2a, 2b mit der auf dem äußeren, bzw. inneren Umfang des zugehörigen Antriebselements bzw. Antriebsrades 1a, 1b angeordneten Verzahnung 10a, 10b, so daß das am Antriebshebel 3a aufgebrachte Antriebsmoment über das Rastelement 2a, 2b auf das entsprechende Antriebselement 1a oder 1b übertragen wird.

Die Rastelemente 2a, 2b weisen hierzu Verzahnungsbereiche 20a, 20b auf, die formschlüssig in die jeweilige Außenoder Innenverzahnung 10a, 10b des ihnen zugeordneten Antriebsrades 1a oder 1b eingreifen.

In Figur 2 ist das dem inneren Antriebsrad 1b zugeordnete innere Rastelement 2b zur Verdeutlichung im Schnitt mit dargestellt, obwohl es nach Figur 1 oberhalb der Schnittlinie I-I liegt und daher eigentlich nicht sichtbar wäre. Das innere Rastelement 2b ist, ebenso wie das in Figur 2 nicht dargestellte, dem äußeren Antriebsrad 1a zugeordnete, äußere Rastelement 2a mit dem Antriebshebel 3a verbunden. Das innere Rastelement 2b weist hierzu einen Zapfen 21 auf, der drehbar in eine Ausnehmung des Antriebshebels 3a eingreift. Der Antriebshebel wiederum ist drehbar auf dem Lagerbolzen 110a gelagert.

Damit das innere Rastelement 2b beim Betätigen des Antriebshebels 3a eine Schwenkbewegung ausführt und mit einem seiner Verzahnungsbereiche 20b in die Innenverzahnung 10b des inneren Antriebsrades 1b eingreift, ist eine nicht mit dem inneren Antriebsrad 1b verbundene Halteplatte 25 vorgesehen, die mit einem Zapfen drehbar in eine Ausnehmung des inneren Rastelements 1b eingreift. Zur Wirkungsweise des äußeren Rastelements 1a wird auf die DE 195 27 912 A1 verwiesen.

Die beiden unterschiedlichen Antriebselemente bzw. Antriebsräder 1a, 1b stehen mit zwei Abtriebselementen 6a, 6b in Wirkverbindung, wobei jedem Antriebselement 1a, 1b jeweils ein anderes Abtriebselement 6a, 6b zugeordnet ist. Bei den in Figur 2 dargestellten Abtriebselementen 6a, 6b handelt es sich um zwei auf unterschiedlichen parallel zueinander verlaufenden Abtriebsachsen 600a, 600b angeordnete Abtriebsritzel 6a, 6b, die über ihre Verzahnung 60a, 60b entsprechende Verstellbewegungen bei einem Fahrzeugsitz verursachen.

Das äußere Antriebsrad 1a kämmt über seine Außenverzahnung 10a mit einem Zahnrad 7a, das auf einer parallel zur Antriebsachse 100a verlaufenden Abtriebsachse 600a angeordnet ist. Die Außenverzahnung 10a des äußeren Antriebsrades 1a dient damit sowohl der Bewegungsübertragung vom Kupplungselement 2a auf das Antriebsrad 1a, als auch der Bewegungsübertragung vom Antriebsrad 1a auf das Zahnrad 7a. Das Zahnrad 7a ist drehbar auf einem koaxial zur Abtriebsachse 600a angeordneten Lagerbolzen 610a gelagert und überträgt seine Bewegung weiter auf das Abtriebsritzel 6a.

Das innere Antriebsrad 1b steht mit einem Abtriebsritzel 6b in Wirkverbindung, dessen Abtriebsachse 600b mit der Antriebsachse 100a übereinstimmt und das drehbar auf demselben Lagerbolzen 110a gelagert ist wie das innere Antriebsrad 1b.

Die beiden Antriebsräder bzw. Antriebselemente 1a, 1b sind jeweils mit einer separaten Sperrvorrichtung 9a, 9b gekoppelt, die derart ausgebildet ist, daß ein abtriebsseitiges Drehmoment gesperrt und ein antriebsseitiges Drehmomentübertragen wird. Die beiden im wesentlichen baugleichen Sperrvorrichtungen 9a, 9b sind dabei jeweils zwischen dem Antriebselement 1a, 1b und dem Abtriebselement 6a, 6b angeordnet und bewirken, daß bei einem auf das Abtriebsritzel 6a, 6b einwirkenden abtriebsseitigen Drehmoment das Sperrelement an die Innenwand eines Bremsgehäuses gedrückt und eine Drehmomentübertragung dadurch blockiert wird.

Bei Einwirkung eines antriebsseitigen Drehmoments wird die Sperrwirkung dagegen aufgehoben. Die Sperrvorrichtungen 9a, 9b verhindern somit, daß bei einem Auftreten äußerer, auf die Verstelleinrichtung von der Abtriebsseite einwirkender Kräfte eine ungewollte Verstellung der Verstelleinrichtung erfolgt. Insbesondere stellen sie sicher, daß im Falle des Auftretens von Crashkräften in Kraftfahrzeugen eine Drehung der Abtriebsritzel 6a, 6b und dadurch eine Verstellung eines Sitzes verhindert wird. Bezüglich des genaueren Aufbaus und der Funktion derartiger Sperrvorrichtungen 9a, 9b wird u.a. auf die DE 41 20 617 A1 verwiesen.

Die Abtriebsritzel 6a, 6b sind mit entsprechenden Elementen einer Sitzverstelleinrichtung verbunden. In der Ausführungsform gemäß den Figuren 1 und 2 kämmt eines der Antriebsritzel 6a über seine Außenverzahnung 60a mit einer Verzahnung 150 auf einem bogenförmigen Teilbereich einer schwenkbaren Sitzrückenlehne 15, so daß eine Verstellung des äußeren Antriebsrades 1a zu einer Veränderung des Neigungswinkels einer Sitzrückenlehne 15 führt. Das dem inneren Antriebsrad 1b zugeordnete Abtriebsritzel 6b kann über seine Außenverzahnung 60b beispielsweise mit einer nicht dargestellten Zahnstange in einer Schienenführung zur Sitzlängsverstellung kämmen.

Durch das oben beschriebene Getriebe lassen sich zwei unterschiedliche Verstellvorgänge in jeweils zwei verschiedene Richtungen realisieren. Insbesondere bei einer Sitzlehnenverstellung ergeben sich große ergonomische Vorteile, da mit der gleichen Antriebsbewegung sowohl eine erste Sitzverstellung, wie z.B. eine Sitzhöhen- oder Sitzlängsverstellung, als auch eine Verstellung der Sitzlehne 15 erreicht werden kann.

Um durch den Antrieb immer nur einen Verstellvorgang ohne Beeinflussung der jeweils anderen Verstelleinrichtung durchzuführen, ist erfindungsgemäß ein Schalter vorgesehen, der die unabhängig voneinander bewegbaren Antriebselemente der Verstelleinrichtungen mit dem Antrieb verbindet. Dazu weist der Schalter ein mittels einer Schalterbetätigung in verschiedene Schaltstellungen bringbares Schaltelement auf, das je nach Schaltstellung die Übertragung eines am Antrieb wirkenden Drehmoments wahlweise auf jeweils ein Antriebselement schaltet. In den Figuren 1 und 2 ist diese Schaltvorrichtung aus Übersichtsgründen nicht dargestellt.

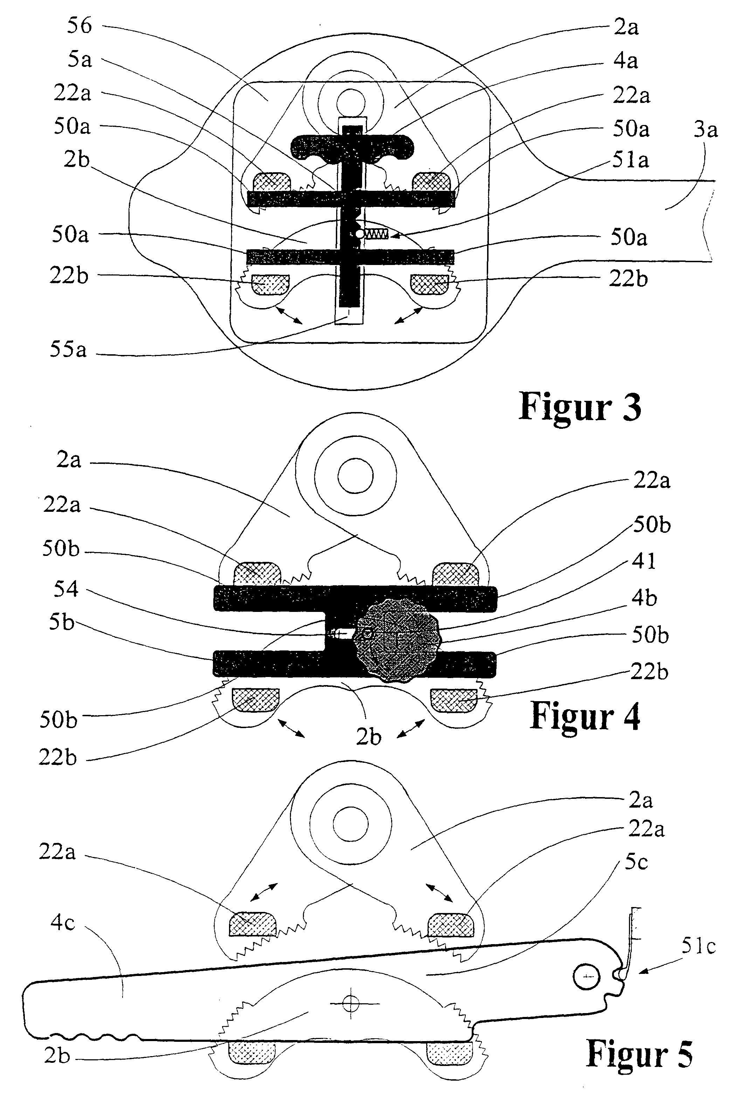

Figur 3 zeigt ein erstes Ausführungsbeispiel für einen in Verbindung mit dem Umschaltgetriebe gemäß den Figuren 1 und 2 verwendbaren Schalters.

Ein mittels einer Schalterbetätigung 4a translatorisch verschiebbares Schaltelement 5a ist in zwei unterschiedliche Schaltstellungen bringbar, die durch eine Rastvorrichtung 51a festgelegt sind. Das Schaltelement 5a wird dabei in einer Führung 55 translatorisch geführt. Die am Schaltelement 5a angreifende Schalterbetätigung 4a besteht im dargestellten Ausführungsbeispiel aus einem Schiebeschalter 4a, mit dem der Bediener das verdeckt hinter einer Abdeckung 56 liegende Schaltelement 5a in die jeweiligen Schaltstellungen schieben kann.

Mittels des Schaltelements 5a kann jeweils eines der beiden bereits aus dem Ausführungsbeispiel gemäß Figur 1 und 2 bekannten, als Kupplungselemente dienenden Rastelemente 2a, 2b in seiner Schwenkbarkeit blockiert und damit an einem Eingriff und einer Kopplung mit dem ihm zugeordneten, hier nicht dargestellten Antriebselement (Antriebsrad) 1a, 1b gehindert werden. Mittels des Schaltelements 5a wird also jeweils ein nicht anzutreibendes Antriebsrad 1a, 1b von dem entsprechenden mit dem Antrieb 3a (nicht dargestellt) wirkverbundenen Rastelement 2a, 2b entkoppelt.

In der dargestellten Schaltstellung wird das äußere Rastelement 2a durch das Schaltelement 5a an einem formschlüssigen Eingreifen in die Außenverzahnung 10a des äußeren Antriebsrades 1a (siehe auch Figur 1) gehindert. Das Schaltelement 5a weist hierzu mehrere, den beiden Rastelementen 2a, 2b zugeordnete Anschläge 50a auf, die beim Entkoppeln an entsprechende Anschläge 22a, 22b des jeweils zu entkoppelnden Rastelements 2a, 2b anliegen. Das äußere Rastelement 2a wird gemäß Figur 3 über seine Anschläge 22a durch die ihm zugeordneten Anschläge 50a des Schaltelements 5a in einer Stellung fixiert, in der es nicht mit dem äußeren Antriebsrad 1a in Wirkverbindung treten kann.

Das innere Rastelement 2b kann in der dargestellten Schaltstellung jedoch ungehindert vom Schaltelement 5a die zum Eingreifen in die Innenverzahnung 10b des inneren Antriebsrades 1b notwendige Schwenkbewegung (Pfeil) ausführen. Ein vom Antriebshebel 3a auf das innere Rastelement 2b übertragenes Drehmoment kann daher weiter auf das innere Antriebsrad 1b übertragen werden.

In der zweiten, nicht dargestellten Schaltstellung wird das innere Rastelement 2b über seine Anschläge 22b durch die ihm zugeordneten Anschläge 50a des Schaltelements 5a in einer Stellung fixiert, in der es nicht mit dem inneren Antriebsrad 1a in Wirkverbindung treten kann. In dieser Schaltstellung ist dann das äußere Rastelement 2a schwenkbar und kann in die Außenverzahnung 10a des äußeren Antriebsrades 1a zum Zweck einer Drehmomentübertragung eingreifen.

Figur 4 zeigt eine weitere Ausführungsform eines Schalters. Der Schalter weist ein Schaltelement 5b auf, das ähnlich wie das Schaltelement 5a aus Figur 3 translatorisch verschiebbar ist, wobei es je nach Schaltstellung mit seinen Anschlägen 50b entweder wie dargestellt an den Anschlägen 22a des äußeren Rastelements 2a oder an den Anschlägen 22b des inneren Rastelements 2b anliegt.

Um das Schaltelement 5b in die verschiedenen Schaltstellungen zu bringen, ist als Schalterbetätigung ein Drehschalter 4b in Form eines Exzenterdrehgriffs vorgesehen. Über einen in einer Schlitzführung 54 des Schaltelements 5b gelagerten Stift 41 des Exzenterschalters 4b,5b wird die Drehbewegung (Pfeil) des Drehschalters 4b in eine translatorische Bewegung (Pfeil) des Schaltelements 5b umgewandelt. Wie in Figur 3 ist in der dargestellten Schaltstellung das äußere Rastelement 2a entkoppelt, während über das innere Rastelement 2b eine Drehmomentübertragung auf das innere, nicht dargestellte Antriebsrad 1b erfolgen kann.

In Figur 5 ist eine weitere Ausführungsvariante eines Schalters dargestellt, bei dem ein als Schalthebel ausgestaltetes Schaltelement 5c einstückig in eine manuell handhabbare Schalterbetätigung 4c übergeht. Der Schalthebel 5c kann mittels einer Rastvorrichtung 51c in zwei Schaltstellungen fixiert werden, in denen er entweder das äußere Rastelement 2a oder - wie dargestellt - das innere Rastelement 2b in seiner Schwenkbarkeit blockiert.

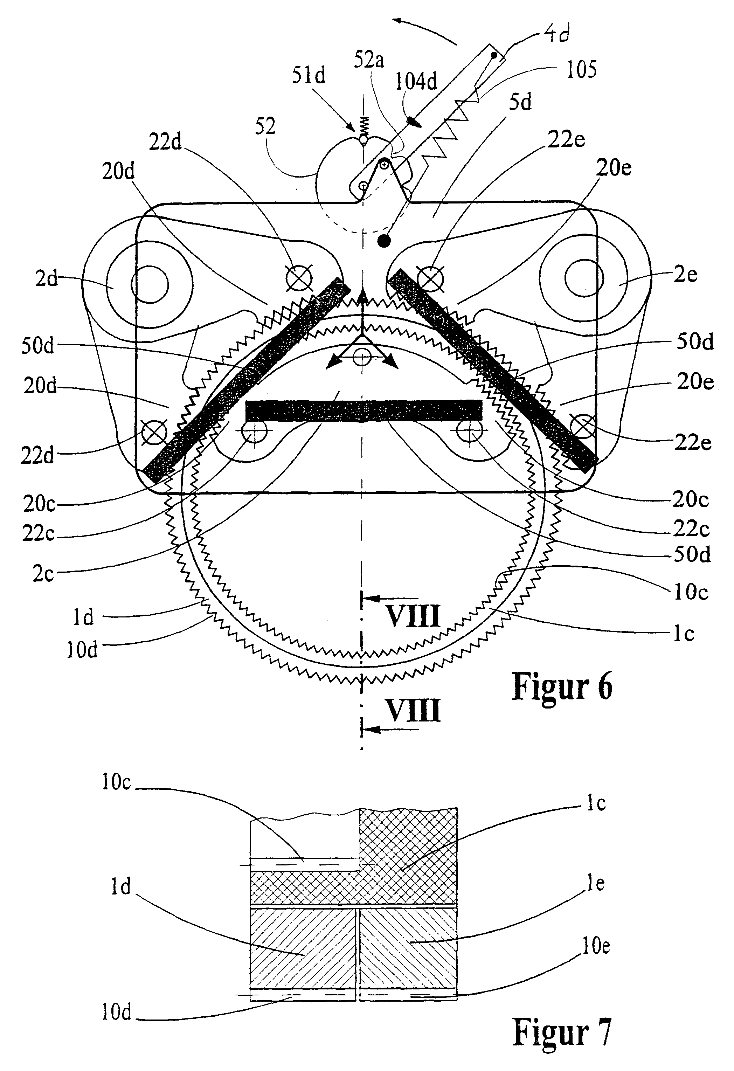

Figur 6 zeigt einen Schalter für ein Umschaltgetriebe für drei Verstelleinrichtungen mit unabhängig voneinander bewegbaren Antriebselementen 1c, 1d, 1e und in einem Dreieck zueinander positionierten Kupplungselementen. In Figur 7 ist in einem Schnitt entlang der Schnittlinie VII-VII gemäß Figur 6 die Anordnung der drei Antriebselemente 1c, 1d, 1e und Kupplungselemente 2c, 2d, 2e dargestellt.

Auf dem äußeren Umfang eines inneren, mit einer Innenverzahnung 10c versehenen Antriebsrades 1c sind zwei hintereinander angeordnete, äußere, jeweils mit einer Außenverzahnung 10d, 10e versehene Antriebsräder 1d, 1e unabhängig voneinander drehbar gelagert. Jedem der Antriebsräder 1c, 1d, 1e ist ein entsprechendes, als Rastelement 2c, 2d, 2e ausgeführtes Kopplungselement 2c, 2d, 2e zugeordnet, über das ein vom nicht dargestellten Antrieb (z.B. einem Antriebshebel) aufgebrachtes Drehmoment auf die Antriebsräder 1c, 1d, 1e übertragen werden kann.

Damit immer nur eines der drei Rastelemente 2c, 2d, 2e das Drehmoment auf das dem Rastelement 2c, 2d, 2e zugeordnete Antriebsrad 1c, 1d, 1e überträgt, werden die nicht benötigten Rastelemente 1c, 1d, 1e mittels eines entlang einer kurvenförmigen Bahn verschiebbaren Schaltelements 5d von den ihnen zugeordneten Antriebsrädern 1c, 1d, 1e entkoppelt.

Das plattenförmige Schaltelement 5d weist hierzu drei Anschläge 50d auf, die mit entsprechenden Anschlägen 22c, 22d, 22e an den Rastelementen 2c, 2d, 2e zusammenwirken können und dadurch eine Schwenkbewegung von immer jeweils zwei Rastelementen 2c, 2d, 2e verhindern. Das Schaltelement 5d wird mittels einer als schwenkbarer Schalthebel 4d ausgebildeten Schalterbetätigung 104d manuell in eine von drei Schaltstellungen gebracht. Mittels einer Rastvorrichtung 51d wird die Schalterbetätigung 104d bzw. das Schaltelement 5d in den jeweiligen Schaltstellungen fixiert. Die Rastvorrichtung 51d wird im dargestellten Ausführungsbeispiel durch eine mittels Federkraft in entsprechende Mulden einer an der Schalterbetätigung 104d befestigten Scheibe eingreifenden Rastkugel gebildet.

In Figur 6 ist ferner eine Zugfeder 105 erkennbar, mittels der die Schalterbetätigung 104d in Richtung der in Figur 6 dargestellten Schaltposition vorgespannt ist. Die Zugfeder 105 wirkt ausgehend von der mittleren der drei Schaltpositionen der Schalterbetätigung 104d jeweils in Richtung der linken oder der rechten äußeren Schaltposition, je nachdem in welche Richtung eine Bedienperson die Schalterbetätigung 104d bewegt, und bewirkt dadurch ein quasi-automatisches, sicheres Erreichen der jeweiligen Schaltposition. Die mittlere Schaltposition entspricht hierbei einer instabilen Mittellage des Schalterbetätigung 104d, die jedoch durch die Rastvorrichtung 51d sicherbar ist.

In der in Figur 6 dargestellten Schaltstellung werden sowohl das innere Rastelement 2c als auch das rechts dargestellte äußere Rastelement 2e durch die Anschläge 50d des plattenförmigen Schaltelements 5d an einer Schwenkbewegung und damit an einem formschlüssigen Eingriff mit ihren Verzahnungsbereichen 20c, 20e in die Außen- bzw. Innenverzahnung 10c, 10e der ihnen zugeordneten Antriebsräder 1c, 1e gehindert. Das links dargestellte Rastelement 2d läßt sich jedoch in der vorliegenden Schaltstellung verschwenken, so daß es je nach Antriebsrichtung mit einem seiner Verzahnungsbereiche 20d in die Außenverzahnung 10d des ihm zugeordneten Antriebsrades 1d eingreifen kann.

In Figur 6 ist das frei bewegliche Rastelement 2d entgegen dem Uhrzeigersinn verschwenkt und greift mit seinem linken Verzahnungsbereich 20d formschlüssig in die Außenverzahnung des Antriebsrades 1d ein. In der dargestellten Stellung des Rastelements 2d ist die Übertragung eines entgegen dem Uhrzeigersinn gerichteten Antriebsmoments vom nicht dargestellten Antrieb auf das Rast- bzw. Kopplungselement 2d und von dort auf das Antriebsrad bzw. -element 1d möglich. Auf die beiden anderen Antriebsräder 1c, 1e wird dabei kein Drehmoment übertragen.

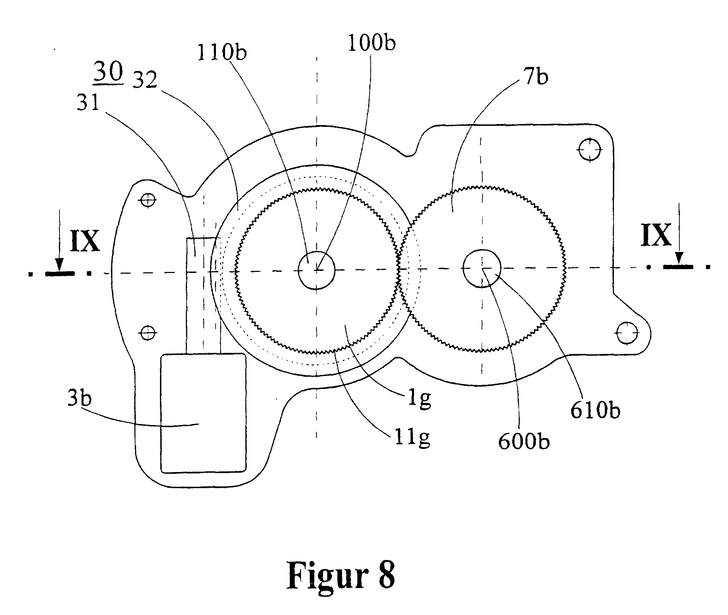

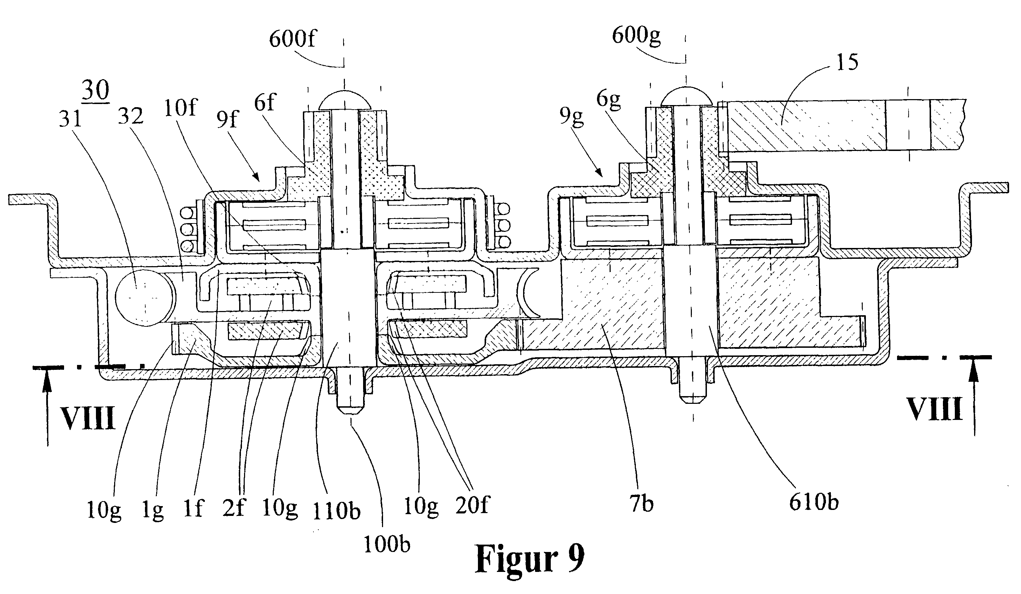

Das in den Figuren 8 und 9 dargestellte Umschaltgetriebe bildet keine Ausführungsform der beanspruchten Erfindung sondern dient lediglich dem besseren Verständnis der Erfindung. Dieses Umschaltgetriebe weist einen als Elektromotor 3b ausgebildeten Antrieb auf, wie er auch bei einem erfindungsgemäßen Umschaltgetriebe Anwendung finden kann.

Figur 8 zeigt das Umschaltgetriebe in einer seitlichen Schnittdarstellung entsprechend der Schnittlinie VIII-VIII gemäß Figur 9, wohingegen Figur 9 das gleiche Umschaltgetriebe in einer geschnittenen Draufsicht, entsprechend der Schnittlinie IX-IX gemäß Figur 8 zeigt.

Im Gegensatz zu dem in den Figuren 1 und 2 dargestellten Umschaltgetriebe werden in diesem Umschaltgetriebe die beiden Antriebselemente 1f, 1g von einem Elektromotor 3b angetrieben. Beide Antriebselemente 1f, 1g sind dabei auf einem axial zur gemeinsamen Antriebsachse 100b ausgerichteten Lagerbolzen 110b drehbar gelagert.

Mittels eines aus einer Schnecke 31 und einem Schneckenrad 32 gebildeten Verzahnungsgetriebes 30 wird das vom Elektromotor 3b aufgebrachte Antriebsmoment auf einen Schaltring 2f übertragen. Der als Kopplungselement dienende Schaltring 2f ist zusammen mit dem Schneckenrad 32 drehbar auf demselben Lagerbolzen 110b gelagert wie die beiden Kupplungselemente 1f, 1g. Der Schaltring 2f ist in axialer Richtung verschiebbar und kann je nach seiner Stellung das vom Elektromotor 3b aufgebrachte Drehmoment wahlweise auf eines der beiden Antriebselemente 1f, 1g übertragen.

Dazu ist der Schaltring 2f drehfest aber axial verschiebbar mit dem Schneckenrad 32 verbunden und weist eine Innenverzahnung 20f auf, die je nach axialer Stellung des Schaltrings 2f formschlüssig in eine entsprechende Innenverzahnung 10f, 10g des einen oder des anderen Antriebselements 1f, 1g eingreift. Der Schaltring 2f kann dabei manuell, motorisch oder elektromagnetisch in seine verschiedenen Schaltstellungen verschoben werden. In einer weiteren bekannten, nicht dargestellten Variante wird durch das Verschieben des Schaltrings eine kraftschlüssige Verbindung zwischen dem Schaltring und dem anzutreibenden Antriebselement hergestellt.

Das in Figur 8 nicht sichtbare, in Figur 9 zuoberst dargestellte Antriebselement 1f ist, wie das aus Figur 1 und 2 bekannte innere Antriebsrad 1b, über eine vergleichbare Sperrvorrichtung 9f mit einem koaxial zum Antriebselement 1f angeordneten, auf dem gleichen Lagerbolzen 110b drehbar gelagerten, als Abtriebselement 6f dienenden Abtriebsritzel 6f wirkverbunden. Antriebsachse 100b und Abtriebsachse 600f sind in diesem Fall identisch.

Das andere Antriebselement 1g weist ähnlich wie das äußere Antriebsrad 1a aus Figur 1 und 2 eine Außenverzahnung 11g auf, über die es mit einem Zahnrad 7b kämmt, das auf einer parallel zur Antriebsachse 100b verlaufenden Abtriebsachse 600g angeordnet ist. Das Zahnrad 7b ist hierzu drehbar auf einem koaxial zur Abtriebsachse 600b angeordneten Lagerbolzen 610b gelagert und überträgt seine Bewegung über eine Sperrvorrichtung 9g weiter auf ein entsprechendes Abtriebsritzel 6g, das wie in den Figuren 1 und 2 die Neigung einer Sitzrückenlehne 15 verstellt.

Um den als Kupplungselement dienenden Schaltring 2f entweder mit dem einen oder dem anderen Antriebsrad 1f, 1g in Eingriff zu bringen, ist eine in den Figuren 8 und 9 nicht dargestellte Schaltvorrichtung vorgesehen. Der Schaltring 2f kann dabei manuell, motorisch oder elektromagnetisch in seine verschiedenen Schaltstellungen verschoben werden. Der Schaltring 2f übernimmt gewissermaßen die Aufgabe eines Schaltelements und eines Kopplungselements.

Eine manuelle Verschiebung des Schaltrings 2f ist beispielsweise in bekannter Weise mittels eines manuell handhabbaren Betätigungselements möglich, wie es z.B. auch zum Schalten eines KFZ-Getriebes in Form eines Schalthebels verwendet wird.

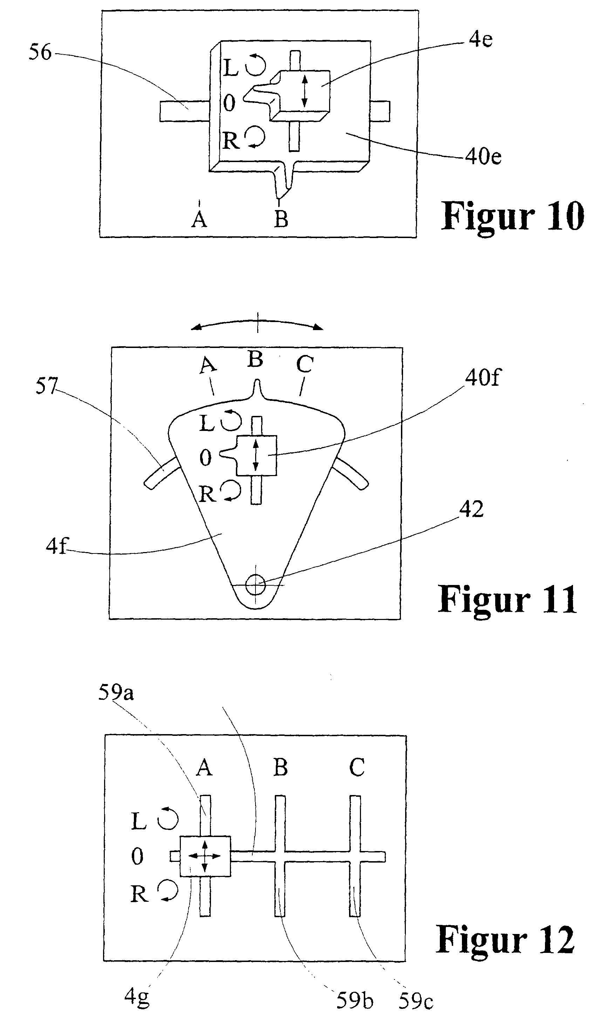

In Figur 10 ist eine erste Ausführungsform eines Schalters dargestellt wie er z.B. in einem elektromotorisch angetriebenen Umschaltgetriebe nach Figur 8 und 9 verwendet werden kann. Der Schalter weist sowohl eine mechanische Schalterbetätigung 40e als auch einen elektrischen Schalter 4e auf. Die manuell handhabbare Schalterbetätigung 40e besteht aus einem in einer Kulissenführung 56 translatorisch, in horizontaler Richtung verschiebbaren Schiebeschalter 40e, mit dem eine von zwei Schaltstellungen A, B angewählt werden kann. Innerhalb dieser Schaltstellungen A, B können durch den Elektromotor 3b z.B. die Sitzneigung, die Sitzhöhe, die Sitzlängsposition, die Sitzkissentiefe oder ein anderer Verstellparameter eingestellt werden.

Aus jeder der beiden Schaltstellungen A, B resultiert jeweils eine der beiden Schaltstellungen des Schaltrings 2f in Figur 9. Aus der dargestellten Schaltstellung B ergibt sich beispielsweise die in Figur 9 dargestellte Position des Schaltrings 2f, in der das zuoberst dargestellte Antriebselement 1f vom Elektromotor 3b angetrieben wird, während das untere Antriebselement 1g vom Antrieb 3b entkoppelt ist. Aus der Schaltstellung A resultiert dementsprechend die Übertragung der Antriebsbewegung auf das untere Antriebselement 1g, während das obere Antriebselement 1f vom Antrieb 3b entkoppelt ist.

Auf den Schiebeschalter 40e ist ein vertikal verschiebbarer elektrischer Schiebeschalter 4e zur Drehrichtungssteuerung des Elektromotors 3b angebracht, mit dem in jeder der beiden Schaltstellung A, B des mechanischen Schiebeschalters 40e der Elektromotor wahlweise rechts herum, nicht oder links herum angetrieben werden kann. Der elektrische Schiebeschalter 4e läßt sich hierzu wahlweise in eine von drei Schaltstufen (L=links, 0=Null-Stellung, R=rechts) verschieben. Vorzugsweise nimmt der elektrische Schiebeschalter 4e bei Nichtbetätigung selbsttätig die Null-Stellung 0 ein.

Analog zu dem in Figur 10 dargestellten Ausführungsbeispiel ist auch eine um 90° gedrehte Ausführungsform denkbar, bei der der mechanische Schiebeschalter vertikal und der elektrische Schiebeschalter horizontal verschoben werden.

Figur 11 zeigt eine weitere Ausführungsform einer mit einem elektrischen Schalter 40f kombinierten manuell betätigbaren Schalterbetätigung 4f. Mittels des dargestellten Schalters können wahlweise drei verschiedenen Antriebselemente angewählt werden. Die Schalterbetätigung 4f ist ein um eine Achse 42 schwenkbarer und in einer kurvenförmigen Kulissenführung 57 geführter Schwenkschalter 4f, der in eine von drei Schaltstellungen A, B, C verschwenkt werden kann. Jede der drei Schaltstellungen entspricht dem Antrieb eines von drei Antriebselementen bzw. der Entkopplung der beiden anderen Antriebselemente.

Wie bei dem in Figur 10 dargestellten Ausführungsbeispiel ist auf dem Schwenkschalter 4f ein vertikal verschiebbarer elektrischer Schiebeschalter 40f zur Drehrichtungssteuerung eines Elektromotors angebracht. Mittels des elektrischen Schiebeschalters 40f kann in jeder der drei Schaltstellung A, B, C des Schwenkschalters 4f die Drehrichtung des Elektromotors angewählt werden. Der elektrische Schiebeschalter 40f läßt sich hierzu wahlweise in eine von drei Schaltstufen (L=links, 0=Null-Stellung, R=rechts) verschieben.

In Figur 12 ist eine weitere Ausführungsform für eine Schalterbetätigung 4g eines Schalters dargestellt. Mit dem Schiebeschalter 4g wird einerseits ein jeweils anzutreibendes Antriebselement bzw. der zu verändernde Verstellparameter angewählt und andererseits die Drehrichtung eines Elektromotors für den Antrieb eingestellt.

Durch ein horizontales Verschieben des Schiebeschalters 4g entlang einer horizontalen Kulissenführung 58 wird eine von drei Schaltstellungen A, B, C angewählt. Entsprechend den Schaltstellungen wird mittels eines elektrischen Servoantriebs das Getriebe geschaltet. Der Servoantrieb bringt dabei je nach horizontaler Schaltstellung A, B, C des Schiebeschalters 4g ein Schaltelement oder einen Schaltring in die Position, in der nur das gewünschte Antriebselement durch einen Elektromotor angetrieben werden kann.

Durch ein vertikales Verschieben des Schiebeschalters 4g entlang einer von drei vertikalen Kulissenführungen 59a, 59b, 59c kann innerhalb der jeweiligen Schaltstufen A, B, C die Drehrichtung des antreibenden Elektromotors angewählt werden. Dabei stehen pro Schaltstufe A, B, C jeweils drei Einstellungen (L=links, 0=Null-Stellung, R=rechts) für den Motor zur Verfügung. Diese Ausführung hat den Vorteil des größten Komforts und läßt durch eine entsprechende Verkabelung eine räumliche Trennung von Schalter und Getriebe zu.

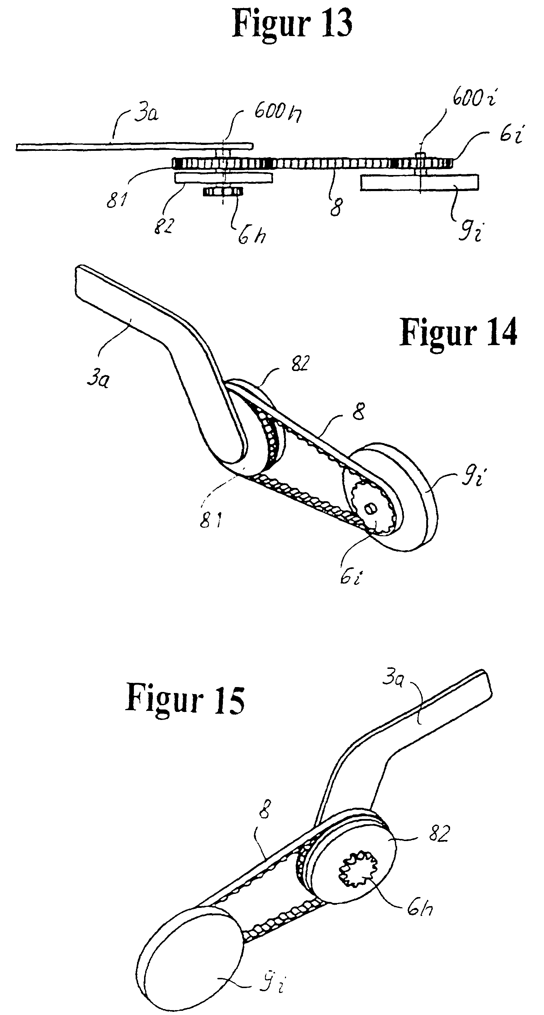

In den Figuren 13 bis 15 ist in Draufsicht bzw. in perspektivischer Vorder- und Rückseitenansicht ein Umschaltgetriebe für zwei Verstelleinrichtungen mit zwei zueinander beabstandeten Abtriebsachsen 600h, 600i dargestellt, von den beispielsweise die Abtriebsachse 600h eine Sitzhöhenverstellung und die Abtriebsachse 600i eine Lehnenneigungsverstellung eines Fahrzeugsitzes betätigt.

Der Antrieb besteht in diesem Ausführungsbeispiel aus einem Antriebshebel 3a, dessen Antriebsmoment über eine beispielsweise dem in Figur 6 dargestellten Ausführungsbeispiel entsprechende Umschaltvorrichtung und über mit den vorstehend beschriebenen Antriebs- und Kupplungselementen versehene Getriebeelemente 81 und 82 (für die Sitzhöhen- und Lehnenneigungsverstellung) auf die Abtriebselemente 6h und 6i erfolgt. Die Kraftübertragung zu dem in Figur 13 entfernt liegenden Abtrieb in Form einer Zahnscheibe 6i für die Lehnenneigungsverstellung wird mittels eines als Zahnriemen ausgebildeten Transmissionselements 8 ausgeführt, das alternativ durch eine Kette oder ein Seil gebildet werden kann.

Die Abtriebsachse 600i für die Lehnenneigungsverstellung ist zusätzlich mit einer Sperrvorrichtung bzw. einem Planeten- oder Taumelgetriebe 9i verbunden, die analog zu den vorstehend beschriebenen Ausführungsbeispielen die Übertragung eines auf das Abtriebselement 6i ausgeübten Drehmoments zur Antriebsseite blockiert.

Abweichend von dem in den Figuren 13 bis 15 dargestellten Ausführungsbeispiel kann auch eine winklige Anordnung der Abtriebsachsen 600h, 600i zueinander vorgesehen werden, wobei ein geringfügiger Winkelvorsatz insbesondere durch das als Kette, Zahnriemen oder Seil ausgebildete Transmissionselement selbst ausgleichbar ist, während ein großer Winkelvorsatz durch eine geeignete Vorrichtung, beispielsweise ein Kardangetriebe, d.h. eine Kardanwelle und ein Kardangelenk, überbrückt werden kann.

Das in den Figuren 13 bis 15 dargestellte Ausführungsbeispiel ermöglicht es, mit nur einem manuellen oder motorischen Antrieb zwei oder mehr Verstelleinrichtungen zu betreiben, die relativ weit auseinander liegen, wie dies beispielsweise für die in den Figuren 13 bis 15 dargestellte Sitzhöhenverstellung und Lehnenneigungsverstellung der Fall ist.

Zusammenfassend wurde anhand der Figuren 1 bis 15 in einzelnen Beispielen der Aufbau eines Umschaltgetriebes für mehrere Verstelleinrichtungen beschrieben, das zum Übertragen der Antriebskraft von einem Antrieb über (mindestens) ein Kupplungselement auf (mindestens) ein jeder Verstelleinrichtung zugeordnetes und konzentrisch zu wenigstens einem Getriebeelement des Antriebs angeordnetes Antriebselement der Verstelleinrichtung vorgesehen ist und das mindestens einen Schalter zum Sperren oder Freigeben der Kupplungselemente aufweist.

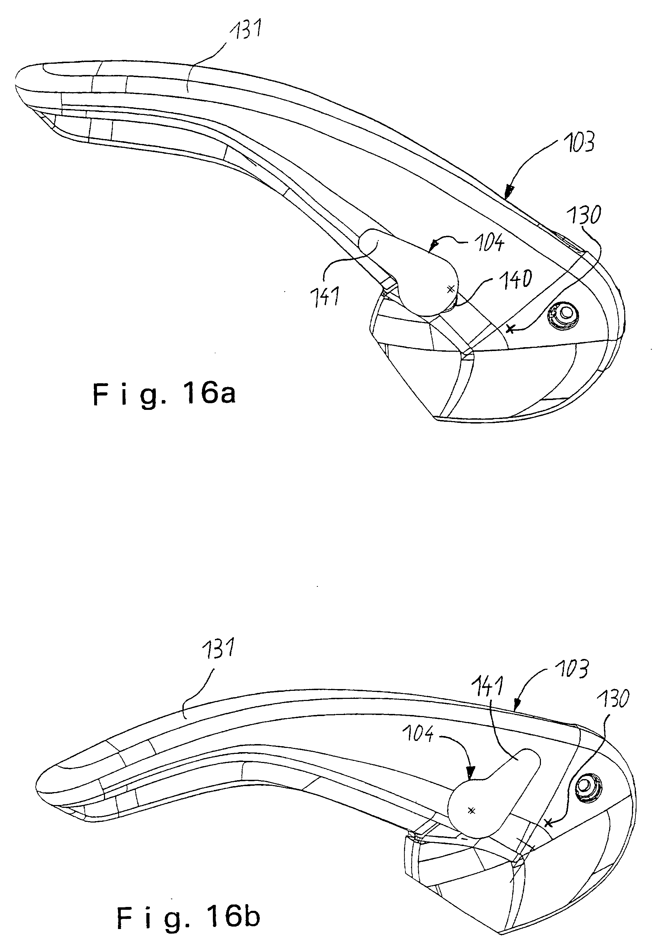

Im folgenden sollen nun anhand der Figuren 16 bis 29 spezielle, vorteilhafte Ausbildungen der Schalterbetätigung beschrieben werden.

In Figur 16a ist perspektivisch ein als Schwenkhebel ausgebildeter, um eine Schwenkachse 130 verschwenkbar gelagerter Verstellhebel 103 dargestellt, der als Antriebshebel für eine manuelle Verstelleinrichtung (entsprechend dem Antriebshebel 3a aus den Figuren 1 und 2) dienen kann. Der Verstellhebel 103 weist hierzu einen Griffabschnitt 131 auf, an dem er von einer Bedienperson zur Betätigung der Verstelleinrichtung ergriffen werden kann.

Der Verstellhebel 103 steht über ein in Figur 16a nicht dargestelltes Umschaltgetriebe, das beispielsweise von dem in den Figuren 1 und 2 dargestellten Typ sein kann, mit zwei unterschiedlichen Verstelleinrichtungen in Wirkverbindung, wobei mittels eines geeigneten Schalters, dessen Schalterbetätigung 104 auf dem Verstellhebel 103 gelagert ist, wahlweise eine dieser beiden Verstelleinrichtungen mit dem Verstellhebel 103 gekoppelt werden kann. Diese Kopplung kann insbesondere mittels einer Kupplung erfolgen, wie sie anhand der Figuren 1 und 2 näher beschrieben wurde.

Die Schalterbetätigung 104 ist zur Bildung eines Schwenkschalters schwenkbar auf einer außerhalb der Schwenkachse 130 des Verstellhebels 103 angeordneten Schwenkachse 140 gelagert und weist einen längserstreckten Betätigungsabschnitt 141 auf. In der in Figur 16a gezeigten Schaltposition der Schalterbetätigung 104 kann der Verstellhebel 103 beispielsweise mit einer ersten Verstelleinrichtung in Form einer Sitzlängsverstellung gekoppelt sein, während er in der in Figur 16b dargestellten zweiten Schaltposition der Schalterbetätigung 104 mit einer anderen Verstelleinrichtung, beispielsweise in Form einer Sitzlehnenverstellung gekoppelt ist. Die beiden in den Figuren 16a und 16b dargestellten Schaltpositionen der Schalterbetätigung 104 entsprechen also jeweils einer definierten Schaltstellung und somit einem definierten Schaltzustand eines Schalters und führen dadurch zur Kopplung einer der mehreren Verstelleinrichtungen mit dem Verstellhebel 103.

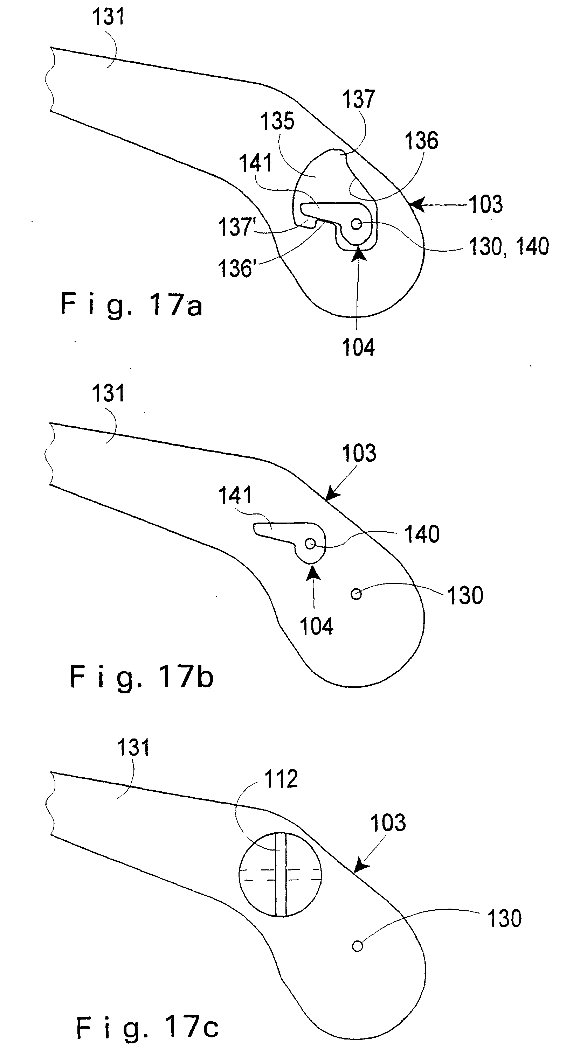

Figur 17a zeigt eine schematische Darstellung des Verstellhebels 103 mit seiner Schwenkachse 130 und seinem Griffabschnitt 131, wobei hier die Schalterbetätigung 104 um die Schwenkachse 130 des Verstellhebels 103 verschwenkbar ist. Die Schwenkachsen 130, 140 des Verstellhebels 103 einerseits und der Schalterbetätigung 104 andererseits fallen also zusammen.

Der Verstellhebel 103 weist zur Aufnahme der Schalterbetätigung 104 eine Ausnehmung 135 auf, deren Rand zwei Anschläge 136, 136' für den Betätigungsabschnitt 141 der Schalterbetätigung 104 bildet, wobei die Anschläge 136, 136' derart angeordnet sind, daß sich die Schalterbetätigung 104 in jeweils einer ihrer beiden Schaltpositionen befindet, wenn deren Betätigungsabschnitt 141 an einem der Anschläge 136, 136' anliegt. Im Bereich der Anschläge 136, 136' sind zudem Mulden 137, 137' vorgesehen, um die Bedienung der Schalterbetätigung 104 zu erleichtern.

Figur 17b zeigt eine Abwandlung des Ausführungsbeispiels aus Figur 17a, bei der die Schwenkachse 140 der Schalterbetätigung 104 neben der Schwenkachse 130 des Verstellhebels 103 vorgesehen ist. Zudem weist hier der Verstellhebel 103 keine Ausnehmung zur Aufnahme der Schalterbetätigung 104 auf.

Das Ausführungsbeispiel gemäß Figur 17c unterscheidet sich von dem Ausführungsbeispiel gemäß Figur 17b dadurch, daß durch die Schalterbetätigung 112 ein Drehschalter gebildet wird. In Figur 17c sind beispielhaft zwei mögliche Schaltpositionen der Schalterbetätigung 112 dargestellt, die jeweils einem definierten Schaltzustand des Schalters entsprechen. Selbstverständlich können mittels einer Schalterbetätigung 112 des in Figur 17c dargestellten Typs auch mehr als zwei unterschiedliche Schaltpositionen einstellbar sein.

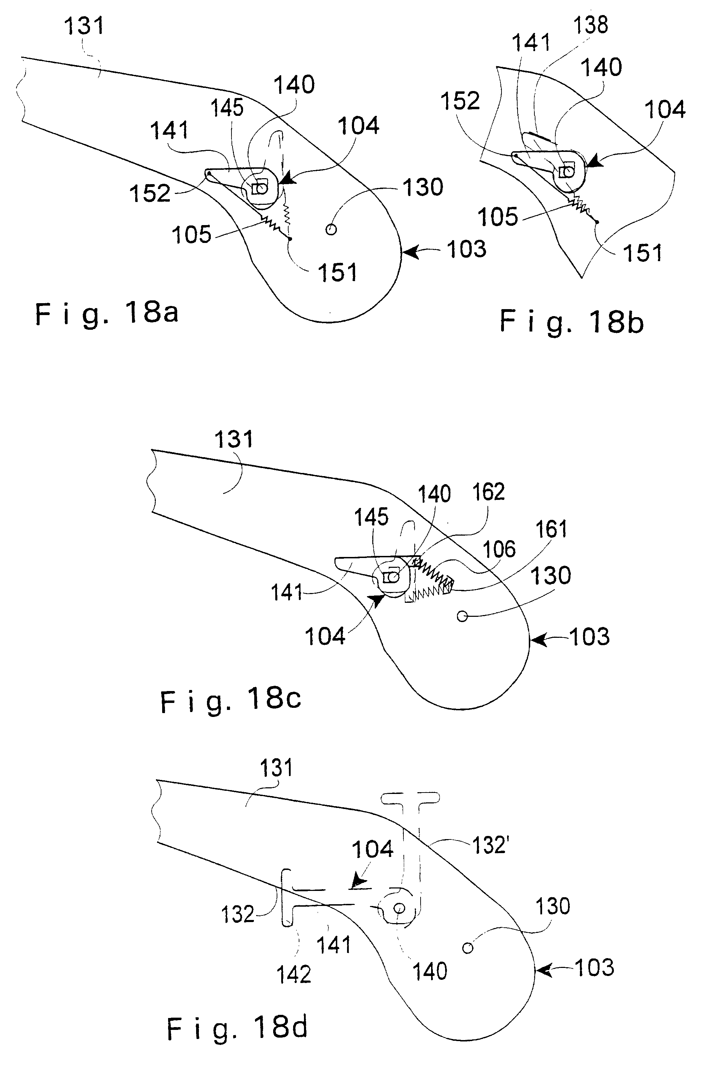

Figur 18a zeigt eine weitere Abwandlung des Ausführungsbeispiels aus Figur 17b, wobei hier die Schalterbetätigung 104 mit einer Zugfeder 105 gekoppelt ist. Diese Zugfeder 105 ist mit ihrem einen Ende 151 an dem Verstellhebel 103 und mit ihrem anderen Ende an dem längserstreckten Betätigungsabschnitt 141 der Schalterbetätigung 104 befestigt.

In dem in Figur 18a dargestellten Zustand der Schalterbetätigung 104 wird diese durch die Zugfeder 105 in ihrer Position gehalten. Das heißt die Zugfeder 105 ist derart vorgespannt, daß sie die Schalterbetätigung 104 in die in Figur 18a dargestellte Schaltposition zieht.

Wird nun von einer Bedienperson die Schalterbetätigung 104 in Richtung auf die zweite, in Figur 1 gestrichelt dargestellte Schaltposition bewegt, so wirkt dieser Schwenkbewegung zunächst die Kraft der Zugfeder 105 entgegen. Sobald aber die Schalterbetätigung 104 mehr als die Hälfte ihres Weges zurückgelegt und die Zugfeder 105 dementsprechend die Schwenkachse 140 der Schalterbetätigung 104 passiert hat, wirkt die Zugkraft nunmehr in Richtung auf die zweite Schaltposition. Das heißt, beim Passieren der instabilen Null-Lage der Schalterbetätigung 104, die genau der Mittelstellung zwischen den beiden in Figur 18a dargestellten Schaltpositionen entspricht, schlägt die Wirkung der Zugfeder 105 derart um, daß sie nun nicht mehr in Richtung auf die erste, sondern in Richtung auf die zweite, in Figur 18a gestrichelt dargestellte Schaltposition wirkt. Dadurch wird die Schalterbetätigung 104 nach dem Passieren der Mittelstellung jeweils automatisch mittels der von der Zugfeder 105 aufgebrachten Kraft in die neue Schaltposition überführt. Dies erhöht den Bedienkomfort, da die Schalterbetätigung zwangsweise jeweils eine der beiden möglichen Schaltpositionen einnimmt. Die Einnahme einer undefinierten Zwischenstellung wird hierdurch vermieden.

In Figur 18a ist ferner ein exzentrisch bezüglich der Schwenkachse 140 ausgebildeter Abschnitt 145 der Schalterbetätigung 104 schematisch angedeutet, der bei einer Schwenkbewegung der Schalterbetätigung 104 den eigentlichen Schaltvorgang auslöst.

Figur 18b zeigt einen Ausschnitt aus einem Verstellhebel 103 gemäß Figur 18a, wobei hier auf dem Verstellhebel 103 zusätzlich ein Anschlag 138 vorgesehen ist, an dem die Schalterbetätigung 104 in ihrer zweiten, in Fig. 18b gestrichelt angedeuteten Schaltposition mit ihrem Betätigungsabschnitt 141 anliegt. Der Anschlag 138 ist dabei derart angeordnet, daß auch in der zweiten Schaltposition der Schalterbetätigung 104 die Kraft der Zugfeder 105 noch in Richtung der ersten (in Fig. 18b als Ausgangsposition gewählten) Schaltposition wirkt; denn die Zugfeder 105 passiert beim Verschwenken der Schalterbetätigung 104 aus der ersten in die zweite Schaltposition deren Schwenkachse 140 nicht.

Somit kann hier der der zweiten Schaltposition der Schalterbetätigung 104 entsprechende Schaltzustand nur durch permanentes Drücken der Schalterbetätigung 104 gegen den Anschlag 138 Aufrechterhalten werden. Es handelt sich also um eine Schalterbetätigung, deren erste Schaltposition mittels der Zugfeder 105 automatisch einstell- und aufrechterhaltbar ist und deren zweite Schaltposition nur durch permante Ausübung einer Kraft entgegen der Federkraft der Zugfeder 105 einstell- und aufrechterhaltbar ist. Wenn hierbei beispielsweise die erste Schaltposition einer Sitzlängsverstellung und die zweite Schaltposition einer Sitzhöhenverstellung zugeordnet ist, dann ist die Sitzlängsverstellung immer dann mit dem Verstellhebel gekoppelt, wenn die Bedienperson die Schalterbetätigung nicht entgegen der Federkraft gegen den Anschlag drückt.

In Figur 18c ist ein weiteres Ausführungsbeispiel der Erfindung dargestellt, bei dem die Schalterbetätigung 104 mittels eines geeigneten elastischen Elementes in Richtung auf ihre Schaltpositionen vorgespannt wird. Der Unterschied zu Figur 18a besteht darin, daß es sich hier bei dem elastischen Element nicht um eine Zug-, sondern um eine Druckfeder 106 handelt, die sich mit ihrem einen Ende an einem auf dem Verstellhebel 103 vorgesehenen Topf 161 und mit ihrem anderen Ende an einem Anschlag 162 auf einem dem Betätigungsabschnitt 141 abgewandten Fortsatz der Schalterbetätigung 104 abstützt.

In dem in Figur 18c dargestellten Zustand der Schalterbetätigung 104 wirkt die Druckkraft der Feder 106 in Richtung auf die waagerechte, erste Schaltposition der Schalterbetätigung 104. Wird nun von einer Bedienperson der Betätigungsabschnitt 141 der Schalterbetätigung 104 derart bewegt, daß die Schalterbetätigung in Richtung auf ihre zweite (senkrechte), in Figur 18c mit gestrichelten Linien angedeutete Schaltposition schwenkt, so findet nach dem Durchgang durch die instabile Mittellage (Nulllage) der Schalterbetätigung 104 eine Änderung der Wirkrichtung der Druckfeder 106 statt, die dann in Richtung auf die zweite Schaltposition wirkt.

Die in den Figuren 18a und 18c dargestellten und vorstehend in ihrer Funktion näher beschriebenen elastischen Elemente 105, 106 können auch bei den übrigen, in den Figuren 16a - 17c und 18c bis 28b dargestellten Schalterbetätigungen eingesetzt werden, um die Schalterbetätigungen in Richtung auf ihre Schaltpositionen vorzuspannen. In diesen Figuren sind die elastischen Elemente aus Gründen der Übersichtlichkeit jeweils nicht dargestellt.

In Figur 18d ist eine weitere Abwandlung des Ausführungsbeispiels aus Figur 17b dargestellt, wobei hier der Betätigungsabschnitt 141 der Schalterbetätigung 104 einen abgewinkelten ("hammerartigen") Endabschnitt 142 aufweist.

Dieser Endabschnitt ragt in den beiden Schaltpositionen der Schalterbetätigung 104 jeweils über eines der beiden seitlichen Enden 131 bzw. 132 des Verstellhebels 103 hinaus. Hierdurch kann eine Bedienperson in einfacher Weise erfühlen, in welcher Schaltposition sich die Schalterbetätigung 104 gerade befindet.

Die Schalterbetätigung 104 ist dabei vorzugsweise auf der dem Fahrzeugsitz zugewandten Seite des Verstellhebels 103 angeordnet, so daß sie eine geschützte Position zwischen dem Verstellhebel 103 und dem durch den Verstellhebel zu verstellenden Fahrzeugsitz einnimmt. Selbstverständlich kann auch bei diesem Ausführungsbeispiel ein elastisches Element verwendet werden, mit dem die Schalterbetätigung 104 in Richtung auf ihre Schaltpositionen vorgespannt wird.

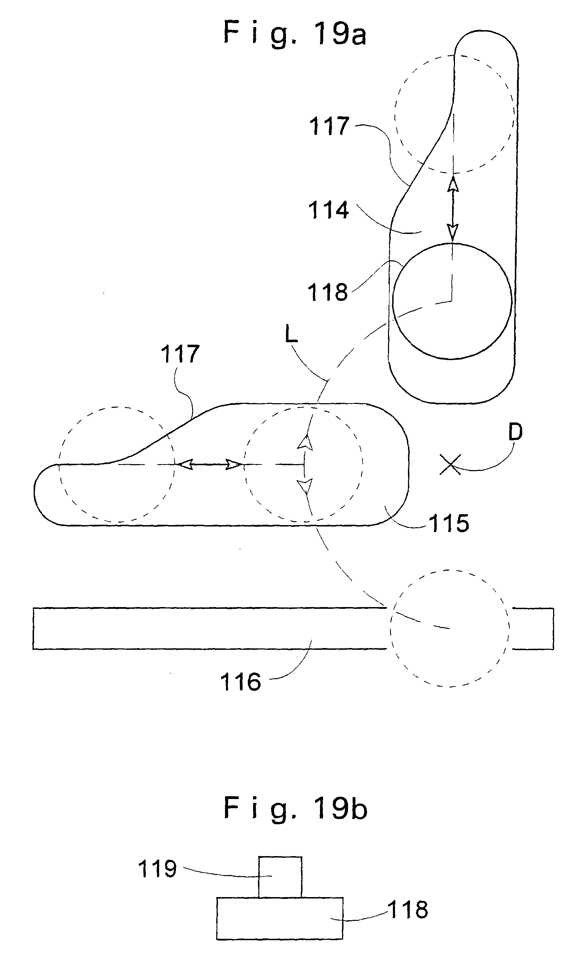

In Figur 19a ist eine Schalterbetätigung 118 in Form eines Dreh-/Schiebeschalters dargestellt, die auf einer definierten Bahn L entlang einer Aufnahme in Form eines symbolischen Fahrzeugsitzes bewegbar ist. Dabei symbolisiert das erste Element 114 der Aufnahme eine Rückenlehne, das zweite Element 115 ein Sitzkissen und das dritte Element 116 eine Schienenlängsverstellung.

In dem in Figur 19a dargestellten Zustand der Schalterbetätigung 118 befindet sich diese in dem unteren Teil des ersten Aufnahmeelementes 114. Diese Schaltposition kann beispielsweise einem Schaltzustand entsprechen, in dem über das Umschaltgetriebe eine Neigungsverstellung der Sitzrückenlehne mit dem Antrieb gekoppelt ist. Durch Verschiebung der Schalterbetätigung 118 in die obere Position in dem ersten Aufnahmeelement 114 kann dann eine Kopplung des Antriebs mit einer Kopfstützenverstellung erfolgen.

Demgegenüber führt eine Drehung der Schalterbetätigung 118 um den Drehpunkt D in die rechte Schaltposition innerhalb des Aufnahmeelementes 115 zu einer Kopplung der Sitzhöhenverstellung mit dem Antrieb, während die linke Schaltposition in dem Aufnahme- element 115 die Aktivierung der Sitzneigungsverstellung zur Folge hat. Eine Bewegung des Schaltelementes 118 in das dritte Aufnahmeelement 116 führt schließlich zu einer Aktivierung der Sitzlängsverstellung.

Durch eine Verschiebung bzw. Drehung der Schalterbetätigung 118 entlang der in Figur 19a gestrichelt angedeuteten Bahn L können somit fünf unterschiedliche Schaltpositionen eingenommen werden, die jeweils einen definierten Schaltzustand repräsentieren, in dem eine bestimmte Verstelleinrichtung über das Umschaltgetriebe mit dem Antrieb gekoppelt ist. Da die Aufnahme für die Schalterbetätigung 118 die Form eines symbolisierten Fahrzeugsitzes aufweist, ist für eine Bedienperson jederzeit erfühlbar, in welcher Schaltposition sich die Schalterbetätigung 118 gerade befindet.

Der Bedienkomfort wird noch dadurch erhöht, daß das erste und das zweite Aufnahmeelement 114, 115 jeweils eine charakteristische Ausformung 117 aufweisen, die die obere von der unteren bzw. die linke von der rechten Schaltposition innerhalb des jeweiligen Aufnahmeelementes 114 bzw. 115 unterscheidet.

Figur 19b zeigt in einer Seitenansicht die Schalterbetätigung 118, die zylinderförmig ausgebildet ist und auf ihrer Rückseite einen Fortsatz 119 aufweist, der in an sich bekannter Weise die eigentlichen Schaltvorgänge auslöst.

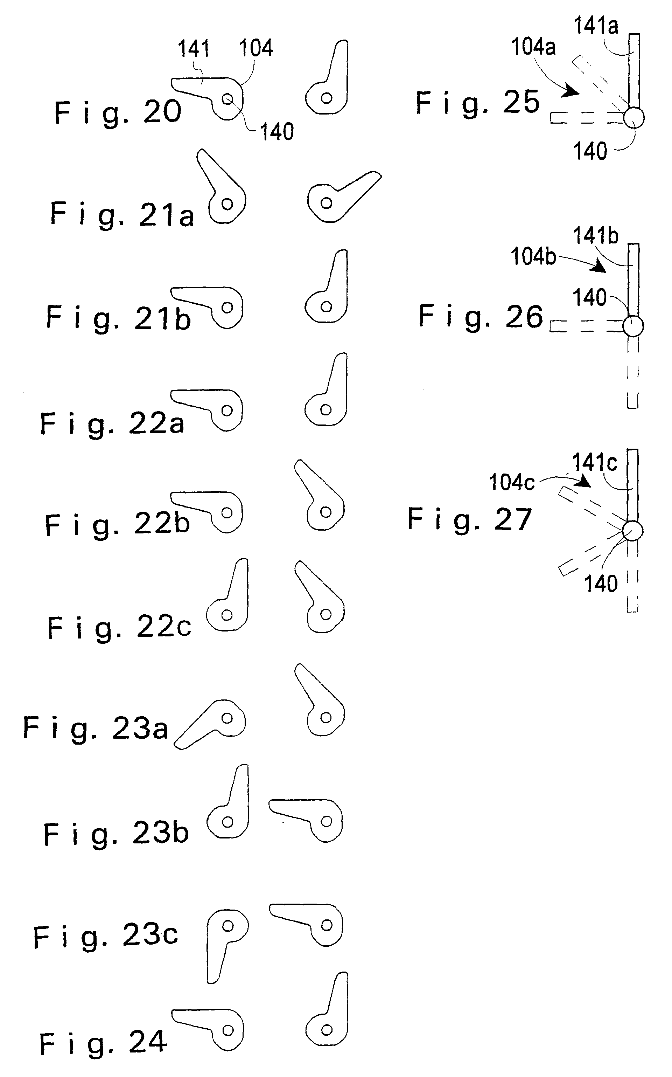

In Figur 20 ist eine auf einer Schwenkachse 140 schwenkbar gelagerte und einen längserstreckten Betätigungsabschnitt 141 aufweisende Schalterbetätigung 104 in zwei unterschiedlichen Schaltpositionen dargestellt.

Die beiden Schaltpositionen sind dabei, im Gegensatz zu den Figuren 17a bis 18d, nicht anhand ein und derselben Schalterbetätigung 104 repräsentiert, wobei jeweils eine Schaltposition gestrichelt dargestellt ist; sondern die beiden möglichen Schaltpositionen werden hier der Übersichtlichkeit halber durch zwei nebeneinander angeordnete Schalterbetätigungen repräsentiert.

In Figur 20 soll die links dargestellte, waagerechte Schaltposition der Schalterbetätigung 104 einen Schaltzustand repräsentieren, in dem die Sitzlängsverstellung aktiviert ist, während in der rechts dargestellten, senkrechten Schaltposition die Sitzhöhenverstellung aktiviert ist. Die Ausrichtung des längserstreckten Betätigungsabschnittes 141 gibt somit jeweils die Verstellrichtung an, entlang der die gerade aktivierte Verstelleinrichtung wirkt. Die Ausrichtung des Betätigungsabschnitts 141 in der jeweiligen Schaltposition der Schalterbetätigung 104 symbolisiert somit jeweils die Verstellrichtung der gerade aktivierten Verstelleinrichtung. Dies erhöht den Bedienkomfort, da ein Benutzer, dem die Verstellrichtungen der einzelnen Verstelleinrichtungen bekannt sind, ohne weiteres erfühlen kann, welche Verstelleinrichtung gerade über das Umschaltgetriebe mit dem Antrieb gekoppelt und dadurch aktiviert ist.

In dem Ausführungsbeispiel gemäß Figur 21a symbolisiert die linke Schaltposition der Schalterbetätigung die Aktivierung der Sitzhöhenverstellung und die rechte Schaltposition der Schalterbetätigung die Aktivierung der Neigungsverstellung der Sitzlehne. Auch hier gibt also die Orientierung des längserstreckten Betätigungsabschnittes der Schalterbetätigung im wesentlichen die Verstellrichtung der gerade aktivierten Verstelleinrichtung an.

In dem Ausführungsbeispiel gemäß Figur 21b symbolisiert ebenfalls die linke Schaltposition die Aktivierung der Sitzhöhenverstellung und die rechte Schaltposition die Aktivierung der Neigungsverstellung der Sitzlehne. Im Unterschied zu dem Ausführungsbeispiel gemäß Figur 21a gibt hier die Orientierung des Betätigungsabschnittes 141 nicht die Verstellrichtung, sondern vielmehr die Lage des mit der gerade aktivierten Verstelleinrichtung einstellbaren Bauteiles an. Die waagerechte Orientierung des Betätigungsabschnittes soll hierbei das (höhenverstellbare) Sitzkissen und die senkrechte Orientierung des Betätigungsabschnittes die (neigungsverstellbare) Sitzlehne repräsentieren.

In den Figuren 22a bis 22c sind drei verschiedene Varianten symbolischer Schaltpositionen der Schalterbetätigung dargestellt, bei denen jeweils die linke Schaltposition die Höhenverstellung und die rechte Schaltposition die Neigungsverstellung des Sitzkissens repräsentieren soll. In den einzelnen Varianten gemäß den Figuren 22a bis 22c werden dabei die zu verstellenden Sitzteile jeweils durch ihre Lage oder durch ihre Verstellrichtung repräsentiert.

In entsprechender Weise sind in den Figuren 23a bis 23c drei unterschiedliche Varianten dargestellt, bei denen die linke Schaltposition der Schalterbetätigung jeweils die Sitzlängsverstellung und die rechte Schaltposition die Verstellung der Sitzkissentiefe repräsentiert.

In Figur 24 schließlich symbolisiert die links dargestellte Schaltposition der Schalterbetätigung die Aktivierung der Sitzlängsverstellung und die rechts dargestellte Schaltposition die Neigungsverstellung der Sitzlehne.

Figur 25 zeigt eine Schalterbetätigung 104a mit einem um eine Achse 140 verschwenkbaren längserstreckten Betätigungsabschnitt 141a, der drei unterschiedliche Schaltpositionen annehmen kann. Dabei symbolisiert die (mit einer durchgezogenen Linie dargestellte) senkrechte Schaltposition die Einstellung der Sitzlehne, die geneigte Schaltposition die Neigungsverstellung und die waagerechte Schaltposition die Höhenverstellung des Sitzkissens.

In Figur 26 ist eine weitere Schalterbetätigung 104b dargestellt, die einen um eine Achse 140 verschwenkbaren Betätigungsabschnitt 141b aufweist, der insgesamt drei unterschiedliche Schaltpositionen einnehmen kann. Dabei repräsentiert die Schaltposition mit dem nach oben ragenden Betätigungsabschnitt die Kopfstützenverstellung, die Schaltposition mit dem waagerechten Betätigungsabschnitt eine Lordosenverstellung des Sitzkissens und die Schaltposition mit dem nach unten weisenden Betätigungselement die Verstellung der Sitzlehnen-Neigung.

Bei dem Ausführungsbeispiel aus Figur 27 kann der Betätigungsabschnitt 141c der Schalterbetätigung 104c insgesamt vier unterschiedliche Schaltpositionen einnehmen, wobei die einzelnen Schaltpositionen jeweils folgende Verstelleinrichtungen repräsentieren (beginnend mit der Schaltposition mit dem nach oben weisenden Betätigungsabschnitt und dann weiter entgegen dem Uhrzeigersinn): Höhenverstellung des Sitzkissens; Neigungsverstellung des Sitzkissens; Sitzkissentiefenverstellung; Sitzlängsverstellung.

Es sei noch darauf hingewiesen, daß die in den Figuren 19 bis 27 dargestellten Möglichkeiten der Symbolisierung bestimmter Verstelleinrichtungen durch die Schalterbetätigung unabhängig davon anwendbar sind, ob die Schalterbetätigung (wie nach der Erfindung vorgesehen) auf einem Verstellhebel angeordnet ist.

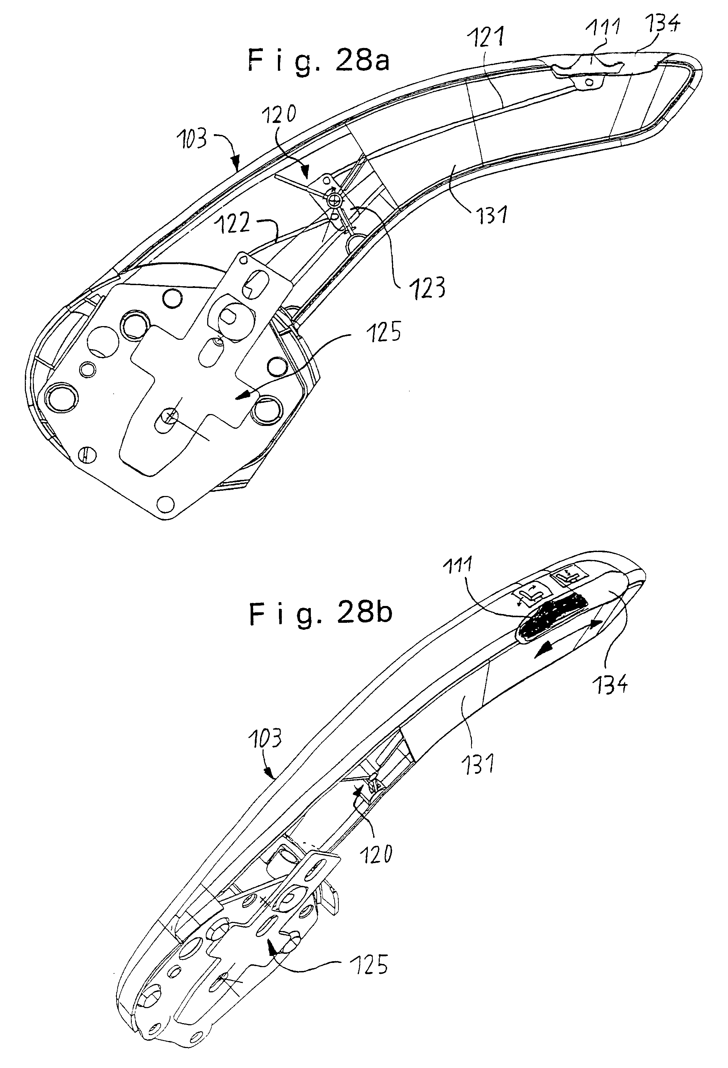

Die Figuren 28a und 28b zeigen in zwei unterschiedlichen Ansichten einen Verstellhebel 103, auf dessen Griffabschnitt 131 in einer Ausnehmung 134 eine Schalterbetätigung 111 für einen Schiebeschalter zwischen zwei Endpositionen (Schaltpositionen) längsverschieblich gelagert ist. Die Schalterbetätigung 111 ist über eine geeignete Hebelmechanik 120, die eine erste Koppelstange 121, ein schwenkbar gelagertes Koppelelement (Koppelkörper 123) und eine zweite Koppelstange 122 umfaßt, mit den Schaltelementen 125 verbunden, die die Kupplung des Umschaltgetriebes sperren oder freigeben.

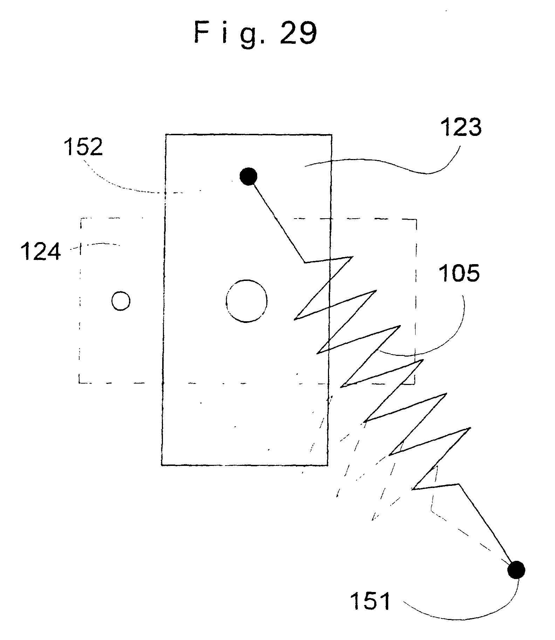

Figur 29 zeigt schematisch ein um eine Achse 124 verschwenkbar gelagertes Koppelelement 123, über das ein Schiebeschalter gemäß den Figuren 28a und 28b mittels geeigneter Koppelstangen 122 mit den Schaltelementen eines Schalters koppelber ist. Das Koppelelement 123 ist mittels einer Zugfeder 105 in Richtung der in Figur 29 mit durchgezogenen Linien dargestellten Ausgangsposition vorgespannt, die einer ersten Schaltposition der zugehörigen Schalterbetätigung entspricht (vergl. Figuren 28a und 28b). Wird die Schalterbetätigung durch Schieben in Richtung auf die zweite Schaltposition bewegt, so wird diese Bewegung auf das Koppelelement 123 übertragen, das dann eine Schwenkbewegung durchführt. Wenn die Schalterbetätigung die Hälfte des Weges hin zu der zweiten Schaltposition zurückgelegt hat, erfolgt nach denselben Prinzipien, die anhand der Figuren 6 und 18a für Schwenkschalter erläutert wurden, ein Wechsel der Wirkrichtung der Zugfeder 105, die nun in Richtung auf die zweite Schaltposition der Schalterbetätigung wirkt.

Anhand Figur 29 wird deutlich, daß die Verwendung eines elastischen Elementes zum quasi-automatischen Einstellen einzelner Schaltpositionen auch bei Schiebeschaltern vorteilhaft möglich ist; entsprechendes gilt für Wippschalter und sonstige Schaltervarianten.

## Patentansprüche

1. Umschaltgetriebe für mindestens zwei Verstelleinrichtungen in Kraftfahrzeugen zum Übertragen der Antriebskraft von einem manuellen oder motorischen Antrieb (3a) über mindestens ein Kupplungselement (2a bis 2e) auf mindestens ein Antriebselement (1a bis 1e) jeder Verstelleinrichtung, das konzentrisch zu wenigstens einem Getriebeelement des Antriebs (3a) angeordnet ist, wobei die einzelnen Antriebselemente (1a bis 1e) durch das mindestens eine Kupplungselement (2a bis 2e) wahlweise mit dem Antrieb (3a) koppelbar sind und wobei mindestens ein Schalter (4a bis 4g; 5a bis 5d; 40e bis 40g) zum Sperren oder Freigeben des Kupplungselementes (2a bis 2e) vorgesehen ist, insbesondere zum Verstellen von Fahrzeugsitzen,
**dadurch gekennzeichnet,**
**daß** das mindestens eine Kupplungselement (2a bis 2e) durch Verschwenken mit einem jeweils anzutreibenden Antriebselement in Eingriff bringbar ist und daß das mindestens eine Kupplungselement (2a bis 2e) mit dem Schalter (4a bis 4g; 5a bis 5d; 40e bis 40g) derart blockierbar ist, daß es an einer Kopplung mit einem nicht anzutreibenden Antriebselement (1a bis 1e) gehindert wird.

2. Umschaltgetriebe nach Anspruch 1, **dadurch gekennzeichnet, daß** durch das mindestens eine Kupplungselement (2a bis 2e) wahlweise genau eines der Antriebselemente (1a bis 1e) mit dem Antrieb (3a) koppelbar ist.

3. Umschaltgetriebe nach Anspruch 1 oder 2, **dadurch gekennzeichnet, daß** jedem Antriebselement (1a bis 1e) eigene Kupplungselemente (2a bis 2e) zugeordnet sind.

4. Umschaltgetriebe nach einem der vorhergehenden Ansprüche, **dadurch gekennzeichnet, daß** zwei benachbarten Antriebselementen ein gemeinsames Kupplungselement zugeordnet ist.

5. Umschaltgetriebe nach einem der vorangehenden Ansprüche, **dadurch gekennzeichnet, daß** ein Schalter (4a bis 4g; 5a bis 5d; 40e bis 40g) sämtliche Kupplungselemente (2a bis 2e) schaltet.

6. Umschaltgetriebe nach einem der vorangehenden Ansprüche, **gekennzeichnet durch** feinverzahnte Formschlußbereiche (20a bis 20e) der Kupplungselemente (2a bis 2e) und der den Kupplungselementen (2a bis 2e) zugeordneten Antriebselemente (1a bis 1e).

7. Umschaltgetriebe nach einem der vorangehenden Ansprüche, **dadurch gekennzeichnet, daß** die Kupplungselemente (2a bis 2e) schwenkbar gelagert sind und in radiale oder axiale Formschlußbereiche der Antriebselemente (1a bis 1e) eingreifen.

8. Umschaltgetriebe nach einem der vorangehenden Ansprüche, **dadurch gekennzeichnet, daß** der Antrieb aus einem manuell betätigbaren Antriebshebel (3a) besteht.

9. Umschaltgetriebe nach einem der vorangehenden Ansprüche 1 bis 7, **dadurch gekennzeichnet, daß** der Antrieb aus einem Motor und einem insbesondere aus einem von einer Antriebsschnecke angetriebenen Schneckenrad bestehenden Verzahnungsgetriebe zusammengesetzt ist.

10. Umschaltgetriebe nach einem der vorangehenden Ansprüche, **dadurch gekennzeichnet, daß** die Kupplungselemente (2a bis 2e) als schwenkbare Hebel ausgebildet und durch ein Federelement in Kupplungsrichtung vorgespannt sind und in der Nullpunktlage des manuell betätigbaren Antriebshebels (3a) mit dem ihnen zugeordneten Antriebselement (1a bis 1e) in Eingriff stehen.

11. Umschaltgetriebe nach einem der vorangehenden Ansprüche, **gekennzeichnet durch** ein einteiliges, als schwenkbar gelagerte Wippe ausgebildetes Kupplungselement (2a bis 2e), das der Schalter (4a bis 4d; 5a bis 5d) in der Blockierstellung an einer Schwenkbewegung, die einen Eingiff in ein Antriebselement (1a bis 1e) erzeugen würde, hindert.

12. Umschaltgetriebe nach einem der vorangehenden Ansprüche, **dadurch gekennzeichnet, daß** benachbarten Antriebselementen (1a bis 1e) ein axial verschiebbares oder schwenkbares und durch den Schalter (4a bis 4g; 5a bis 5d) betätigbares Kupplungselement (2a bis 2e) zugeordnet ist.

13. Umschaltgetriebe nach einem der vorangehenden Ansprüche, **dadurch gekennzeichnet, daß** der Schalter aus einer Schalterbetätigung (4a bis 4d) und einem Schaltelement (5a bis 5d) zusammengesetzt ist, daß das Schaltelement (5a bis 5d) einen oder mehrere, den verschiedenen Kupplungselementen (2a bis 2e) zugeordnete Anschläge (50a, 50b, 50d) aufweist, die beim Entkoppeln an mindestens einem Anschlag (22a bis 22e) des oder der jeweils zu auszukuppelnden Kupplungselemente (2a bis 2e) anliegen und die auszukuppelnden Kupplungselemente (2a bis 2e) in einer Stellung fixieren, in der sie nicht mit den ihnen zugeordneten Antriebselementen (1a bis 1e) in Wirkverbindung stehen.

14. Umschaltgetriebe nach einem der vorangehenden Ansprüche, **dadurch gekennzeichnet, daß** für Antriebe mit einem manuell betätigbaren Antriebshebel (3a) die Schalterbetätigung als Schiebeschalter (4a, 4d, 4e, 4g), Schwenkschalter (4c, 4f), insbesondere als Exzenterschalter ausgebildeter Drehschalter (4b), Wippschalter oder Dreh- und Schiebeschalter ausgebildet ist.

15. Umschaltgetriebe nach Anspruch 14, **dadurch gekennzeichnet, daß** der Schiebeschalter (4a, 4d, 4e, 4g) auf einer Kurvenbahn oder translatorisch bewegbar ist.

16. Umschaltgetriebe nach einem der vorangehenden Ansprüche 1 bis 13, **dadurch gekennzeichnet, daß** für motorische Antriebe die Schalterbetätigungen (4e bis 4g) zusätzlich mit einem elektrischen Schalter (40e bis 40g) gekoppelt sind, mit dem der motorische Antrieb in die eine oder andere Richtung reversierbar ist.

17. Umschaltgetriebe nach einem der vorangehenden Ansprüche, **dadurch gekennzeichnet, daß** bei einer Anordnung von drei Verstelleinrichtungen die Kupplungselemente (2c bis 2e) in einem Dreieck zueinander positioniert sind und daß zur Freigabe der Kupplungselemente (2c bis 2e) für eine Verstelleinrichtung der Schalter ein Dreieck-Schiebeschalter (4d; 5d) ist, dessen Schiebekontur der Dreieckskontur der Anordnung der Kupplungselemente (2c bis 2e) zumindest angenähert ist.

18. Umschaltgetriebe nach Anspruch 17, **dadurch gekennzeichnet, daß** die Dreieckkontur die Form eines gleichschenkligen oder gleichseitigen Dreiecks aufweist.

19. Umschaltgetriebe nach einem der vorangehenden Ansprüche, **dadurch gekennzeichnet, daß** ein Antriebselement (1a bis 1e) jeweils mit einem entsprechenden Abtriebselement (6a, 6b) der Verstelleinrichtung wirkverbunden ist und daß die Achse (100a) des Antriebselements (1a bis 1e) mit der Achse (600b) des jeweiligen Abtriebselements (6b) übereinstimmt.

20. Umschaltgetriebe nach einem der vorangehenden Ansprüche 1 bis 18, **dadurch gekennzeichnet, daß** ein Antriebselement (1a bis 1e) jeweils mit einem entsprechenden Abtriebselement (6a, 6b) wirkverbunden ist und daß die Achse (100a) des Antriebselements (1a bis 1e) von der Achse (600a) des jeweiligen Abtriebselements (6a) verschieden ist.

21. Umschaltgetriebe nach einem der vorangehenden Ansprüche, **dadurch gekennzeichnet, daß** bei zueinander beabstandeten Abtriebsachsen (600h, 600i) von zwei oder mehr Verstelleinrichtungen die Kraftübertragung von dem Getriebe (81) mindestens einer Verstelleinrichtung über ein Transmissionselement (8) zum Abtriebselement (6i) dieser Verstelleinrichtung erfolgt.

22. Umschaltgetriebe nach Anspruch 21, **dadurch gekennzeichnet, daß** das Transmissionselement (8) aus einer Kette, einem Zahnriemen, einem Seil oder einem Kardangetriebe besteht.

23. Umschaltgetriebe nach einem der vorhergehenden Ansprüche, **dadurch gekennzeichnet, daß** der Schalter zum Sperren oder Freigeben des Kupplungselementes mittels einer Schalterbetätigung (104, 104a - 104d, 111, 112, 118) schaltbar ist.

24. Umschaltgetriebe nach Anspruch 23, **dadurch gekennzeichnet, daß** der Antrieb durch einen Verstellhebel (103) betätigbar ist und daß die Schalterbetätigung (104, 104a - 104d, 111, 112, 118) auf dem Verstellhebel (103) angeordnet ist.

25. Umschaltgetriebe nach Anspruch 24, **dadurch gekennzeichnet, daß** der Verstellhebel (103) als Schwenkhebel ausgebildet ist.

26. Umschaltgetriebe nach Anspruch 24 oder 25, **dadurch gekennzeichnet, daß** die Schalterbetätigung (104, 111) in einer Ausnehmung (134, 135) des Verstellhebels (103) angeordnet ist.

27. Umschaltgetriebe nach Anspruch 26, **dadurch gekennzeichnet, daß** die Ausnehmung (135) mindestens einen Anschlag (136, 136') für die Schalterbetätigung (104) bildet.

28. Umschaltgetriebe nach einem der Ansprüche 24 bis 27, **dadurch gekennzeichnet, daß** der Verstellhebel (103) neben dem Fahrzeugsitz vorgesehen und die Schalterbetätigung (104) auf der dem Fahrzeugsitz zugewandten Seite des Verstellhebels (103) zwischen Verstellhebel (103) und Fahrzeugsitz angeordnet ist.

29. Umschaltgetriebe nach einem der Ansprüche 24 bis 28, **dadurch gekennzeichnet, daß** die Schalterbetätigung (104) in mindestens zwei unterschiedlichen Schaltzuständen des Schalters mit einem Betätigungsabschnitt (141) jeweils über unterschiedliche seitliche Endabschnitte (132, 132') des Verstellhebels (103) hinausragt.

30. Umschaltgetriebe nach einem der Ansprüche 23 bis 30, **dadurch gekennzeichnet, daß** mindestens ein elastisches Element (105, 106) vorgesehen ist, das auf die Schalterbetätigung (104, 104d) eine Kraft in Richtung auf eine Schaltposition ausübt, die einem definierten Schaltzustand des Schalters entspricht.

31. Umschaltgetriebe nach Anspruch 30, **gekennzeichnet durch** eine derartige Ausbildung und Anordnung des elastischen Elementes (105, 106), daß dessen Kraft erst dann in Richtung auf die jeweilige Schaltposition wirkt, wenn sich die Schalterbetätigung (104, 104d) dieser bis auf einen vorgebbaren Abstand genähert hat, insbesondere wenn die Schalterbetätigung (104, 104d) über eine instabile Referenzlage hinaus bewegt worden ist.

32. Umschaltgetriebe nach Anspruch 31, **dadurch gekennzeichnet, daß** das elastische Element (105, 106) durch eine Zug- oder eine Druckfeder gebildet wird.

33. Umschaltgetriebe nach einem der Ansprüche 30 bis 32, **dadurch gekennzeichnet, daß** eine Schaltposition der Schalterbetätigung (104) mittels des elastischen Elementes (105) automatisch einstell- und aufrechterhaltbar ist und daß eine andere Schaltposition der Schalterbetätigung (104) nur durch Ausübung einer Kraft entegen der Kraft des elastischen Elementes (105) einstell- und aufrechterhaltbar ist.

34. Umschaltgetriebe nach einem der Ansprüche 30 bis 33, **gekennzeichnet durch** ein Rastvorrichtung (51d) zum Verrasten der Schalterbetätigung (104d) in mindestens einer Schaltposition, die einem definierten Schaltzustand des Schalters entspricht.

35. Umschaltgetriebe nach Anspruch 34, **dadurch gekennzeichnet, daß** die Rastvorrichtung (51d) federnd vorgespannt ist.

36. Umschaltgetriebe nach einem der Ansprüche 23 bis 35, **dadurch gekennzeichnet, daß** die Schalterbetätigung (104, 104a - 104d, 112) zur Bildung eines Schwenkoder eines Drehschalters vorgesehen ist.

37. Umschaltgetriebe nach einem der Ansprüche 30 bis 35 und Anspruch 36, **dadurch gekennzeichnet, daß** das elastische Element (105, 106) an der Schalterbetätigung (104, 104d) außerhalb ihrer Schwenkachse (140) angreift.

38. Umschaltgetriebe nach einem der Ansprüche 23 bis 35, **dadurch gekennzeichnet, daß** die Schalterbetätigung (111) zur Bildung eines Schiebe- oder eines Wippschalters vorgesehen ist.

39. Umschaltgetriebe nach einem der Ansprüche 23 bis 38, **dadurch gekennzeichnet, daß** ein Betätigungsabschnitt (141, 141a - 141c) der Schalterbetätigung (104, 104a - 104c) in den einzelnen Schaltzuständen des Schalters jeweils eine räumliche Orientierung aufweist, die charakteristisch für das Verstellteil ist, dessen Verstelleinrichtung in dem jeweiligen Schaltzustand mit dem Antrieb gekoppelt ist.

40. Umschaltgetriebe nach Anspruch 39, **dadurch gekennzeichnet, daß** die Schalterbetätigung (104, 104a - 104c) einen längserstreckten Betätigungsabschnitt (141, 141a - 141c) aufweist, dessen räumliche Orientierung in den einzelnen Schaltzuständen der räumlichen Orientierung oder der Verstellrichtung des entsprechenden Verstellteiles entspricht.

41. Umschaltgetriebe nach einem der Ansprüche 23 bis 40, **dadurch gekennzeichnet, daß** die Schalterbetätigung (118) entlang einer Aufnahme (114, 115, 116) in Form eines symbolischen Fahrzeugsitzes bewegbar ist, wobei jede Schaltposition der Schalterbetätigung (118) in der Aufnahme (114, 115, 116) einem definierten Schaltzustand des Schalters entspricht.

42. Umschaltgetriebe nach Anspruch 41, **dadurch gekennzeichnet, daß** der Schalter als Dreh-/Schiebeschalter (113) ausgebildet ist.

43. Umschaltgetriebe nach Anspruch 41 oder 42, **dadurch gekennzeichnet, daß** an der Aufnahme (114, 115, 116) Ausformungen (117) vorgesehen sind, die charakteristisch für die jeweilige Schaltposition der Schalterbetätigung (118) und beim Bedienen der Schalterbetätigung (118) erfühlbar sind.

## Claims

1. Adjusting gear mechanism for at least two adjusting devices in motor vehicles for transferring the drive force from a manual or motorised drive (3a) through at least one clutch element (2a to 2e) to at least a drive element (1a to 1e) of each adjusting device which is mounted concentric with at least one gear element of the drive (3a), wherein the individual drive elements (1a to 1e) can be coupled selectively to the drive (3a) through the at least one clutch element (2a to 2e) and wherein at least one switch (4a to 4g; 5a to 5d; 40e to 40g) is provided for locking or releasing the clutch element (2a to 2e), more particularly for adjusting vehicle seats, **characterised in that** the at least one clutch element (2a to 2e) can be brought into engagement through swivel movement with each drive element which is to be driven and that the at least one clutch element (2a to 2e) can be blocked with the switch (4a to 4g; 5a to 5d; 40e to 40g) so that it is prevented from coupling with a drive element (1a to 1e) which is not to be driven.

2. Adjusting gear mechanism according to claim 1, **characterised in that** through the at least one clutch element (2a to 2e) it is possible to couple selectively and accurately one of the drive elements (1a to 1e) to the drive (3a).

3. Adjusting gear mechanism according to claim 1 or 2, **characterised in that** each drive element (1a to 1e) has its own dedicated clutch elements (2a to 2e).

4. Adjusting gear mechanism according to one of the preceding claims, **characterised in that** two adjoining drive elements are allotted one common clutch element.

5. Adjusting gear mechanism according to one of the preceding claims, **characterised in that** one switch (4a to 4g; 5a to 5d; 40e to 40g) switches all the clutch elements (2a to 2e).

6. Adjusting gear mechanism according to one of the preceding claims, **characterised by** finely toothed positively locking areas (20a to 20e) of the clutch elements (2a to 2e) and of the drive elements (1a to 1e) dedicated to the clutch elements (2a to 2e).

7. Adjusting gear mechanism according to one of the preceding claims, **characterised in that** the clutch elements (2a to 2e) are mounted for swivel movement and engage in radial or axial positive locking areas of the drive elements (1a to 1e).

8. Adjusting gear mechanism according to one of the preceding claims, **characterised in that** the drive consists of a manually operable drive lever (3a).

9. Adjusting gear mechanism according to one of the preceding claims 1 to 7, **characterised in that** the drive consists of a motor and a toothed gearing consisting in particular of a worm wheel driven by a drive worm.

10. Adjusting gear mechanism according to one of the preceding claims, **characterised in that** the clutch elements (2a to 2e) are formed as swivel levers and are pretensioned by a spring element in the coupling direction and in the neutral position of the manually operable drive lever (3a) engage with the drive element (1a to 1e) which is dedicated thereto.

11. Adjusting gear mechanism according to one of the preceding claims, **characterised by** a one-piece clutch element (2a to 2e) designed as a swivel mounted rocker arm which the switch (4a to 4d; 5a to 5d) in the blocking position prevents from any swivel movement which would result in engagement in a drive element (1a to 1e).

12. Adjusting gear mechanism according to one of the preceding claims, **characterised in that** the adjoining drive elements (1a to 1e) are allotted an axially displaceable or swivel clutch element (2a to 2e) which can be operated by the switch (4a to 4g; 5a to 5d).

13. Adjusting gear mechanism according to any of the preceding claims, **characterised in that** the switch is comprised of a switch actuator unit (4a to 4d) and a switch element (5a to 5d), that the switch element (5a to 5d) has one or more stops (50a, 50b, 50d) dedicated to the different clutch elements (2a to 2e) and which during de-coupling adjoin at least one stop (22a to 22e) of the or each clutch element (2a to 2e) which is to be decoupled and fix the clutch elements (2a to 2e) which are to be decoupled in a position in which they do not interact with the drive elements (1a to 1e) associated therewith.

14. Adjusting gear mechanism according to one of the preceding claims, **characterised in that** for drives having a manually operated drive lever (3a) the switch actuation unit is formed as a sliding switch (4a, 4d, 4e, 4g), swivel switch (4c, 4f), more particularly a rotary switch (4b) formed as an eccentric switch, rocker switch or rotary and sliding switch.

15. Adjusting gear mechanism according to claim 14, **characterised in that** the sliding switch (4a, 4d, 4e, 4g) is movable on a curved track or in translation.

16. Adjusting gear mechanism according to one of the preceding claims 1 to 13, **characterised in that** for motorised drives the switch actuator units (4e to 4g) are additionally coupled to an electric switch (40e to 40g) with which the motorised drive can be reversed in one direction or the other.

17. Adjusting gear mechanism according to one of the preceding claims, **characterised in that** where there are three adjusting devices the clutch elements (2c to 2e) are positioned in a triangle relative to each other and that to release the clutch elements (2c to 2e) for an adjusting device the switch is a triangular sliding switch (4d;5d) whose sliding contour is at least roughly similar to the triangular contour of the arrangement of the clutch elements (2c to 2e).

18. Adjusting gear mechanism according to claim 17, **characterised in that** the triangular contour has the shape of an isosceles or equilateral triangle.

19. Adjusting gear mechanism according to one of the preceding claims, **characterised in that** a drive element (1a to 1e) is in active connection each time with a corresponding output element (6a, 6b) of the adjusting device and that the axis (100a) of the drive element (1a to 1e) agrees with the axis (600b) of the relevant output element (6b).

20. Adjusting gear mechanism according to one of the preceding claims 1 to 18, **characterised in that** a drive element (1a to 1e) is in active connection with each corresponding output element (6a, 6b) and that the axis (100a) of the drive element (1a to 1e) is different from the axis (600a) of the relevant output element (6a).

21. Adjusting gear mechanism according to one of the preceding claims, **characterised in that** with spaced output axes (600h, 600i) of two or more adjusting devices the force transfer is from the gear (81) of at least one adjusting device through a transmission element (8) to the output element (6i) of this adjusting device.

22. Adjusting gear mechanism according to claim 21, **characterised in that** the transmission element (8) consists of a chain, toothed belt, cable or cardan gearbox.

23. Adjusting gear mechanism according to one of the preceding claims, **characterised in that** the switch for locking or releasing the clutch element can be switched by means of a switch actuator unit (104, 104a- 104d, 111, 112, 118).

24. Adjusting gear mechanism according to claim 23, **characterised in that** the drive can be actuated by an adjusting lever (103) and that the switch actuator unit (104, 104a - 104d, 111, 112, 118) is mounted on the adjusting lever (103).

25. Adjusting gear mechanism according to claim 24, **characterised in that** the adjusting lever (103) is formed as a swivel lever.

26. Adjusting gear mechanism according to claim 24 or 25, **characterised in that** the switch actuator unit (104, 111) is mounted in a recess (134, 135) of the adjusting lever (103).

27. Adjusting gear mechanism according to claim 26 **characterised in that**, the recess (135) forms at least one stop (136, 136') for the switch actuator unit (104).

28. Adjusting gear mechanism according to one of claims 24 to 27, **characterised in that** the adjusting lever (103) is provided next to the vehicle seat and the switch actuator unit (104) is mounted on the side of the adjusting lever (103) facing the vehicle seat between the lever (103) and the seat.

29. Adjusting gear mechanism according to one of claims 24 to 28, **characterised in that** the switch actuator unit (104) in at least two different switching states of the switch projects by an operating section (141) beyond different side end sections (132, 132') of the adjusting lever (103).

30. Adjusting gear mechanism according to one of the claims 23 to 30, **characterised in that** at least one elastic element (105, 106) is provided which exerts on the switch unit (104, 104d) a force in the direction of a switching position which corresponds to a defined switching stage of the switch.

31. Adjusting gear mechanism according to claim 30, **characterised by** a configuration and arrangement of the elastic element (105, 106) such that its force only acts in the direction of the relevant switching position when the switch actuator unit (104, 104d) has approached a predeterminable distance, more particularly when the switch unit (104, 104d) has been moved beyond an unstable reference position.

32. Adjusting gear mechanism according to claim 31, **characterised in that** the elastic element (105, 106) is formed by a tensile or compression spring.

33. Adjusting gear mechanism according to one of claims 30 to 32, **characterised in that** one switch position of the switch actuator unit (104) can be automatically adjusted and maintained by means of the elastic element (105) and that another switch position of the switch actuator unit (104) can only be adjusted and maintained by exerting a force against the force of the elastic element (105).

34. Adjusting gear mechanism according to one of claims 30 to 33, **characterised by** a detent catch device (51d) for engaging the switch actuator unit (104d) in at least one switch position which corresponds to a defined switching state of the switch.

35. Adjusting gear mechanism according to claim 34, **characterised in that** the catch detent device (51d) is resiliently pretensioned.

36. Adjusting gear mechanism according to one of claims 23 to 35, **characterised in that** the switch actuator unit (104, 104a - 104d, 112) is provided for forming a swivel or rotary switch.

37. Adjusting gear mechanism according to one of claims 30 to 35 and claim 36, **characterised in that** the elastic element (105, 106) engages on the switch actuator unit (104, 104d) outside of its swivel axis (140).

38. Adjusting gear mechanism according to one of claims 23 to 35, **characterised in that** the switch actuator unit (111) is provided to form a sliding or rocker switch.

39. Adjusting gear mechanism according to one of claims 23 to 38, **characterised in that** an actuating section (141, 141a- 141c) of the switch actuator unit (104, 104a - 104c) has in the individual switching states of the switch a spatial orientation which is characteristic of the adjusting part whose adjusting device is coupled in the relevant switching state to the drive.

40. Adjusting gear mechanism according to claim 39, **characterised in that** the switch actuator unit (104, 104a - 104c) has an elongated actuating section (141, 141a- 141c) whose spatial orientation in the individual switching states corresponds to the spatial orientation or adjusting direction of the corresponding adjusting part.

41. Adjusting gear mechanism according to one of claims 23 to 40, **characterised in that** the switch actuator unit (118) is movable along a socket (114, 115, 116) in the form of a symbolic vehicle seat whereby each switch position of the switch actuator unit (118) in the socket (114, 115, 116) corresponds to a defined switching state of the switch.

42. Adjusting gear mechanism according to claim 41, **characterised in that** the switch is formed as a rotary/sliding switch (113).

43. Adjusting gear mechanism according to claim 41 or 42, **characterised in that** the socket (114, 115, 116) is provided with shaped areas (117) which are characteristic for the relevant switching position of the switch actuator unit (118) and can be detected when operating the switch actuator unit (118).

## Revendications

1. Mécanisme de changement de position pour au moins deux dispositifs de positionnement dans des véhicules automobiles pour transmettre la force d'entraînement d'un dispositif d'entraînement (3a) manuel ou motorisé par le biais d'au moins un élément d'accouplement (2a à 2e) à au moins un élément d'entraînement (1a à 1e) de chaque dispositif de positionnement, lequel est disposé de manière concentrique par rapport à au moins un élément d'engrenage du dispositif d'entraînement (3a), les éléments d'entraînement individuels (1a à 1e) pouvant être couplés à volonté avec 1e dispositif d'entraînement (3a) par l'au moins un élément d'accouplement (2a à 2e) et au moins un commutateur (4a à 4g ; 5a à 5d ; 40e à 40g) étant prévu pour bloquer ou pour libérer l'élément d'accouplement (2a à 2e), plus particulièrement pour positionner des sièges de véhicule,
**caractérisé en ce**
**que** l'au moins un élément d'accouplement (2a à 2e) peut, par basculement, être mis en prise avec un élément d'entraînement correspondant à entraîner et que l'au moins un élément d'accouplement (2a à 2e) peut être bloqué avec le commutateur (4a à 4g ; 5a à 5d ; 40e à 40g) de manière à empêcher son accouplement avec un élément d'entraînement (1a à 1e) qui n'est pas à entraîner.

2. Mécanisme de changement de position selon la revendication 1, **caractérisé en ce que** précisément l'un des éléments d'entraînement (1a à 1e) au choix peut être couplé avec le dispositif d'entraînement (3a) par le biais d'au moins un élément d'accouplement (2a à 2e).

3. Mécanisme de changement de position selon la revendication 1 ou 2, **caractérisé en ce que** des éléments d'accouplement (2a à 2e) propres sont associés à chaque élément d'entraînement (1a à 1e).

4. Mécanisme de changement de position selon l'une quelconque des revendications précédentes, **caractérisé en ce qu'**un élément d'accouplement commun est associé à deux éléments d'entraînement voisins.

5. Mécanisme de changement de position selon l'une quelconque des revendications précédentes, **caractérisé en ce qu'**un commutateur (4a à 4g ; 5a à 5d ; 40e à 40g) commande tous les éléments d'accouplement (2a à 2e).

6. Mécanisme de changement de position selon l'une quelconque des revendications précédentes, **caractérisé par** des zones à fermeture géométrique à denture fine (20a à 20e) des éléments d'accouplement (2a à 2e) et des éléments d'entraînement (1a à 1e) associés aux éléments d'accouplement (2a à 2e).

7. Mécanisme de changement de position selon l'une quelconque des revendications précédentes, **caractérisé en ce que** les éléments d'accouplement (2a à 2e) sont logés de manière à pouvoir pivoter et viennent en prise dans des zones à fermeture géométrique radiales ou axiales des éléments d'entraînement (1a à 1e).

8. Mécanisme de changement de position selon l'une quelconque des revendications précédentes, **caractérisé en ce que** le dispositif d'entraînement se compose d'un levier d'entraînement à commande manuelle (3a).

9. Mécanisme de changement de position selon l'une quelconque des revendications précédentes 1 à 7, **caractérisé en ce que** le dispositif d'entraînement est constitué d'un moteur et d'un mécanisme à denture composé notamment d'une roue à denture hélicoïdale entraînée par une vis sans fin d'entraînement.

10. Mécanisme de changement de position selon l'une quelconque des revendications précédentes, **caractérisé en ce que** les éléments d'accouplement (2a à 2e) sont réalisés sous la forme de leviers pivotants et sont précontraints par un élément ressort en direction de l'accouplement et sont en prise avec l'élément d'entraînement (1a à 1e) qui leur est associé lorsque le levier d'entraînement à commande manuelle (3a) se trouve en position neutre.

11. Mécanisme de changement de position selon l'une quelconque des revendications précédentes, **caractérisé par** un élément d'accouplement (2a à 2e) monobloc réalisé sous la forme d'une bascule pivotante que le commutateur (4a à 4d ; 5a à 5d) en position de blocage empêche d'effectuer un mouvement de pivotement qui donnerait lieu à une prise dans un élément d'entraînement (1a à 1e).

12. Mécanisme de changement de position selon l'une quelconque des revendications précédentes, **caractérisé en ce qu'**un élément d'accouplement (2a à 2e) coulissant dans le sens axial ou pivotant et pouvant être actionné par le commutateur (4a à 4d ; 5a à 5d) est associé à des éléments d'entraînement (1a à 1e) voisins.

13. Mécanisme de changement de position selon l'une quelconque des revendications précédentes, **caractérisé en ce que** le commutateur est constitué d'une commande de commutateur (4a à 4d) et d'un élément de commutation (5a à 5d), que l'élément de commutation (5a à 5d) présente une ou plusieurs butées (50a, 50b, 50d) associées aux différents éléments d'accouplement (2a à 2e), lesquelles reposent, lors de l'accouplement, sur moins une butée (22a à 22e) du ou des éléments d'accouplement (2a à 2e) respectifs à désaccoupler et les éléments d'accouplement (2a à 2e) sont bloqués dans une position dans laquelle ils ne se trouvent pas en liaison active avec les éléments d'entraînement (1a à 1e) qui leur sont associés.

14. Mécanisme de changement de position selon l'une quelconque des revendications précédentes, **caractérisé en ce que** pour les dispositifs d'entraînement munis d'un levier d'entraînement à commande manuelle (3a), la commande du commutateur est réalisée sous la forme d'un commutateur à glissière (4a, 4d, 4e, 4g), d'un commutateur pivotant (4c, 4f), notamment d'un commutateur rotatif (4b) réalisé sous la forme d'un commutateur excentrique, d'un commutateur à bascule ou d'un commutateur rotatif et pivotant.

15. Mécanisme de changement de position selon la revendication 14, **caractérisé en ce que** le commutateur pivotant (4a, 4d, 4e, 4g) peut se déplacer sur une voie incurvée ou effectuer un mouvement de translation.

16. Mécanisme de changement de position selon l'une quelconque des revendications précédentes 1 à 13, **caractérisé en ce que** pour les dispositifs d'entraînement motorisés, les commandes du commutateur (4e à 4g) sont en plus couplées avec un commutateur électrique (40e à 40g) avec lequel le dispositif d'entraînement motorisé peut être mis en mouvement dans un sens ou dans l'autre.

17. Mécanisme de changement de position selon l'une quelconque des revendications précédentes, **caractérisé en ce que** dans le cas d'un arrangement de trois dispositifs de positionnement, les éléments d'accouplement (2c à 2e) sont positionnés selon un triangle les uns par rapport aux autres et que pour libérer les éléments d'accouplement (2c à 2e) pour un dispositif de positionnement, le commutateur est un commutateur à glissière en triangle (4d ; 5d) dont le profil de coulissement est au moins approchant du profil triangulaire de l'arrangement des éléments d'accouplement (2a à 2e).

18. Mécanisme de changement de position selon la revendication 17, **caractérisé en ce que** le profil triangulaire présente la forme d'un triangle équilatéral ou isocèle.

19. Mécanisme de changement de position selon l'une quelconque des revendications précédentes, **caractérisé en ce qu'**un élément d'entraînement (1a à 1e) se trouve à chaque fois en liaison active avec un élément d'entraînement (6a, 6b) correspondant du dispositif de positionnement et que l'axe (100a) de l'élément d'entraînement (1a à 1e) coïncide avec l'axe (600b) de l'élément d'entraînement (6b) respectif.

20. Mécanisme de changement de position selon l'une quelconque des revendications précédentes 1 à 18, **caractérisé en ce qu'**un élément d'entraînement (1a à 1e) se trouve à chaque fois en liaison active avec un élément d'entraînement (6a, 6b) correspondant et que l'axe (100a) de l'élément d'entraînement (1a à 1e) est différent de l'axe (600a) de l'élément d'entraînement (6a) respectif.

21. Mécanisme de changement de position selon l'une quelconque des revendications précédentes, **caractérisé en ce qu'**en présence de deux axes d'entraînement (600h, 600i) espacés l'un de l'autre, de deux dispositifs de positionnement ou plus, la transmission de la force du mécanisme (81) d'au moins un dispositif de positionnement s'effectue par le biais d'un élément de transmission (8) vers l'élément d'entraînement (6i) de ce dispositif de positionnement.

22. Mécanisme de changement de position selon la revendication 21, **caractérisé en ce que** l'élément de transmission (8) se compose d'une chaîne, d'une courroie crantée, d'un câble ou d'une transmission par cardan.

23. Mécanisme de changement de position selon l'une quelconque des revendications précédentes, **caractérisé en ce que** le commutateur de blocage ou de libération de l'élément d'accouplement peut être commandé au moyen d'une commande de commutateur (104, 104a - 104d, 111, 112, 118).

24. Mécanisme de changement de position selon la revendication 23, **caractérisé en ce que** le dispositif d'entraînement peut être commandé par un levier de positionnement (103) et que la commande de commutateur (104, 104a - 104d, 111, 112, 118) est disposée sur le levier de positionnement (103).

25. Mécanisme de changement de position selon la revendication 24, **caractérisé en ce que** le levier de positionnement (103) est réalisé sous la forme d'un levier pivotant.

26. Mécanisme de changement de position selon la revendication 24 ou 25, **caractérisé en ce que** la commande de commutateur (104, 111) est disposée dans un creux (134, 135) du levier de positionnement (103).

27. Mécanisme de changement de position selon la revendication 26, **caractérisé en ce que** le creux (135) forme au moins une butée (136, 136') pour la commande de commutateur (104).

28. Mécanisme de changement de position selon l'une des revendications 24 à 27, **caractérisé en ce que** le levier de positionnement (103) est prévu à côté du siège du véhicule et la commande de commutateur (104) est disposée sur le côté du levier de positionnement (103) qui fait face au siège du véhicule, entre le levier de positionnement (103) et le siège du véhicule.

29. Mécanisme de changement de position selon l'une des revendications 24 à 28, **caractérisé en ce que** dans au moins deux états de commutation différents du commutateur, une portion d'actionnement (141) de la commande de commutateur (104) fait à chaque fois saillie au-dessus de sections finales latérales différentes (132, 132') du levier de positionnement (103).

30. Mécanisme de changement de position selon l'une des revendications 23 à 30, **caractérisé en ce qu'**il est prévu au moins un élément élastique (105, 106) qui exerce sur la commande de commutateur (104, 104d) une force en direction d'une position de commutation qui correspond à un état de commutation donné du commutateur.

31. Mécanisme de changement de position selon la revendication 30, **caractérisé par** une configuration et un arrangement tels de l'élément élastique (105, 106) que sa force n'agit en direction de la position de commutation correspondante que si la commande de commutateur (104, 104d) de celui-ci s'est approchée de celui-ci jusqu'à une distance prédéfinie, notamment lorsque la commande de commutateur (104, 104d) a été déplacée au-delà d'une position de référence instable.

32. Mécanisme de changement de position selon la revendication 31, **caractérisé en ce que** l'élément élastique (105, 106) est formé par un ressort de traction ou de compression.

33. Mécanisme de changement de position selon l'une des revendications 30 à 32, **caractérisé en ce qu'**une position de commutation de la commande de commutateur (104) au moyen de l'élément élastique (105) peut être établie et conservée automatiquement et qu'une position de commutation différente de la commande de commutateur (104) ne peut être établie et conservée qu'en exerçant une force contre l'élément élastique (105).

34. Mécanisme de changement de position selon l'une des revendications 30 à 33, **caractérisé par** un dispositif d'encliquetage (51d) pour encliqueter la commande de commutateur (104d) dans au moins une position de commutation qui correspond à un état de commutation défini du commutateur.

35. Mécanisme de changement de position selon la revendication 34, **caractérisé en ce que** le dispositif d'encliquetage (51d) est précontraint par ressort.

36. Mécanisme de changement de position selon l'une des revendications 23 à 35, **caractérisé en ce que** la commande de commutateur (104, 104a - 104d, 112) est prévue pour former un commutateur pivotant ou rotatif.

37. Mécanisme de changement de position selon l'une des revendications 30 à 35, **caractérisé en ce que** l'élément élastique (105, 106) agit sur la commande de commutateur (104, 104d) en-dehors de son axe de pivotement (140).

38. Mécanisme de changement de position selon l'une des revendications 23 à 35, **caractérisé en ce que** la commande de commutateur (111) est prévue pour former un commutateur à glissière ou à bascule.

39. Mécanisme de changement de position selon l'une des revendications 23 à 38, **caractérisé en ce qu'**une portion de commande (141, 141a - 141c) de la commande de commutateur (104, 104a - 104c) présente respectivement, dans chacun des états de commutation du commutateur, une orientation dans l'espace qui est caractéristique de la pièce à positionner dont le dispositif de positionnement est couplé avec le dispositif d'entraînement dans l'état de commutation correspondant.

40. Mécanisme de changement de position selon la revendication 39, **caractérisé en ce que** la commande de commutateur (104, 104a - 104c) présente une portion de commande (141, 141a - 141c) étendue en longueur dont l'orientation dans l'espace dans chacun des états de commutation correspond à l'orientation dans l'espace ou au sens de positionnement de la pièce à positionner correspondante.

41. Mécanisme de changement de position selon l'une des revendications 23 à 40, **caractérisé en ce que** la commande de commutateur (118) peut se déplacer le long d'un logement (114, 115, 116) qui se présente sous la forme d'un siège de véhicule symbolique, chaque position de commutation de la commande de commutateur (118) dans le logement (114, 115, 116) correspondant ici à un état de commutation donné du commutateur.

42. Mécanisme de changement de position selon la revendication 41, **caractérisé en ce que** le commutateur est réalisé sous la forme d'un commutateur rotatif/à glissière (113).

43. Mécanisme de changement de position selon la revendication 41 ou 42, **caractérisé en ce que** sur le logement (114, 115, 116) sont prévues des moulures (117) qui sont caractéristiques des positions de commutation respectives de la commande de commutateur (118) et qui peuvent être perçues en manoeuvrant la commande de commutateur (118).
